(19) Europäisches Patentamt / European Patent Office / Office européen des brevets

(11) **EP 4 752 744 A1**

(12) **EUROPEAN PATENT APPLICATION**

(43) Date of publication:
**03.06.2026 Bulletin 2026/23**

(21) Application number: **25213325.1**

(22) Date of filing: **04.11.2025**

(51) International Patent Classification (IPC):
***G06F 16/21*** *(2019.01)*

(52) Cooperative Patent Classification (CPC):
**G06F 16/217**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **27.11.2024 US 202463725909 P**
           **31.01.2025 US 202519043019**

(71) Applicant: **Microsoft Technology Licensing, LLC**
**Redmond, WA 98052-6399 (US)**

(72) Inventors:
• **Gruenheid, Anja**
  **Redmond, WA, 98052 (US)**
• **Sakdeo, Sumedh Vivek**
  **Redmond, WA, 98052 (US)**

• **Pak, Stanislav O.**
  **Redmond, WA, 98052 (US)**
• **Camacho Rodriguez, Jesus**
  **Redmond, WA, 98052 (US)**
• **Nilangekar, Pooja Ganesh**
  **College Park, MD, 20742 (US)**
• **Gandhi, Lenisha Vinod**
  **Redmond, WA, 98052 (US)**
• **Ramakrishnan, Raghunath**
  **Redmond, WA, 98052 (US)**
• **Curino, Carlo Aldo**
  **Redmond, WA, 98052 (US)**
• **Singhal, Sandeep Kishan**
  **Redmond, WA, 98052 (US)**

(74) Representative: **Grünecker Patent- und Rechtsanwälte PartG mbB**
**Leopoldstraße 4**
**80802 München (DE)**

(54) **AUTOMATED DATA COMPACTION FOR TABLE FORMATS**

(57)    Systems, methods, devices, and computer readable storage media described herein provide techniques for automatic compaction of data for table formats. In an aspect, a statistic is determined for a plurality of candidates. A trait is determined based on the statistic. The plurality of candidates are ranked with respect to a compaction objective based on the trait. Performance of a compaction action is caused with respect to a candidate based on a ranking of the candidate.

FIG. 1

# EP 4 752 744 A1

**Description**

CROSS-REFERENCE TO RELATED APPLICATIONS

This application is claims benefit of and priority to U.S. Provisional Patent Application No. 63/725,909, entitled "AUTOMATED DATA COMPACTION FOR TABLE FORMATS," filed on November 27, 2024, the entirety of which is incorporated by reference herein.

BACKGROUND

The amount of raw data in all forms generated by computing systems of business organizations, science researchers and the like may be quite large, on the order of hundreds of petabytes. Modern systems often gather and generate data at a rate many times greater than such data can be usefully categorized and managed. Data lakes have seen increasing adoption in such instances. A "data lake" is a data storage platform configured to store such quantities of raw data in native form whether structured or unstructured.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

Embodiments described herein are related to automatic data compaction for table formats. For example, in an embodiment, a statistic is determined for a plurality of candidates. The candidates of the plurality of candidates comprise a respective set of files managed by a table format. The plurality of candidates are ranked with respect to a compaction objective based on the statistic. The compaction objective specifies a target outcome of compacting at least one of the plurality of candidates. A first candidate is selected from among the plurality of candidates based at least on the ranks. A compaction action is determined based at least on the compaction objective, the table format, and the first candidate. Performance of the compaction action is caused with respect to the first candidate.

In a further example, a trait is determined based on the statistic. The trait describes a state of a respective candidate of the plurality of candidates. The plurality of candidates are ranked based on their respective states.

In a further example, performance of the compaction action is prioritized over performance of a second compaction action associated with a second candidate based at least on a computation budget available within a data lake.

In a further example, candidates are filtered from the plurality of candidates to reduce the number of candidates to be ranked.

In a further example, statistics for the plurality of candidates are determined responsive to detection of a triggering event.

In a further example, statistics for a candidate are updated based on a comparison between the result of a compaction action and an estimated result utilized to rank the compaction action.

BRIEF DESCRIPTION OF THE DRAWINGS/FIGURES

The accompanying drawings, which are incorporated herein and form a part of the specification, illustrate embodiments and, together with the description, further serve to explain the principles of the embodiments and to enable a person skilled in the pertinent art to make and use the embodiments.

FIG. 1 shows a block diagram of a system for automatic compaction of data, in accordance with an example embodiment.

FIG. 2 shows a block diagram of a system comprising the file compactor of FIG. 1.

FIG. 3 shows a flowchart of a process for compacting data, in accordance with an example embodiment.

FIG. 4 shows a flowchart of a process for selecting a candidate file, in accordance with an example embodiment.

FIG. 5 shows a flowchart of a process for selecting a candidate file, in accordance with another example embodiment.

FIG. 6 shows a flowchart of a process for prioritizing a compaction action, in accordance with an example embodiment.

FIG. 7 shows a flowchart of a process for filtering a candidate file, in accordance with an example embodiment.

FIG. 8 shows a flowchart of a process for triggering evaluation of a candidate file, in accordance with an example embodiment.

FIG. 9 shows a block diagram of a system for updating a statistic or trait, in accordance with an example embodiment.

FIG. 10 shows a flowchart of a process for evaluating a result of a compaction action and updating a statistic or trait, in accordance with an example embodiment.

FIG. 11 shows a block diagram of data flow in a data management system, in accordance with an example embodiment.

FIG. 12 shows a block diagram of a managed table API, in accordance with an example embodiment.

FIG. 13 shows a block diagram of a data lake system, in accordance with an example embodiment.

FIG. 14 shows a block diagram of an example computing environment in which embodiments may be implemented.

The subject matter of the present application will now be described with reference to the accompanying drawings. In the drawings, like reference numbers indicate identical or functionally similar elements. Additionally, the left-most digit(s) of a reference number identifies the drawing in which the reference number first appears.

DETAILED DESCRIPTION

I. Introduction

The following detailed description discloses numerous example embodiments. The scope of the present patent application is not limited to the disclosed embodiments, but also encompasses combinations of the disclosed embodiments, as well as modifications to the disclosed embodiments. It is noted that any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

II. Embodiments for Data Compaction

Embodiments of the present disclosure relate to data compaction. For instance, some embodiments described herein provide automated data compaction for table formats, such as in data lake applications. A table format enables structured data to be stored in a storage solution while remaining organized for external query engines. In an aspect, a table format enables structured data to be stored in a data lake storage solution while remaining organized for external query engines, thereby improving query performance.

In some aspects of data management, organizations have shifted toward data lake-centric architectures. In an implementation, a data lake stores large volumes of unstructured, uncleansed, or ungoverned data in a scalable distributed file system and/or a fault tolerant distributed file system; however, embodiments described herein are not so limited. For instance, in some implementations, a data lake is utilized to manage core, governed, and/or structured data in lieu of or in addition to ungoverned, uncleansed, or unstructured data. For instance, a scalable storage service can utilize a data lake to store data. In an implementation, data can be persisted across diverse workloads. Data stored in the distributed storage system of a data lake can be accessible to various engines and/or applications. These distributed storage systems provide independent scaling of storage (e.g., storage space) and compute (e.g., processing power, number of centralized processing units, and/or the like), improving the flexibility and efficiency of the storage system in meeting the requirements of tenants, users, and applications utilizing it. A distributed storage system can also reduce or eliminate data silos. A data silo is a repository of data isolated from other systems, an application not designed to communicate with others, and/or the like. By reducing or eliminating data silos, the distributed storage system streamlines workflows and reduces complexity in data movement across systems. A distributed storage system can also provide a flexible choice in a query engine for an application, thereby mitigating lock-in concerns and allowing for optimization in query engine selection.

In some embodiments, a distributed storage system is designed to meet consistency and/or isolation requirements for engines and/or applications, such as during complex transactions involving read and write operations. In order to meet these criteria, embodiments described herein utilize table formats. Table formats store data persistently in files (e.g., as immutable data) with a format. An example table format is a log structured table (LST), though embodiments described herein are not so limited. In some embodiments, a table format comprises a metadata layer that records table versions and/or attributes, such as data schemas, statistics, and/or the like. In some embodiments, a table format is associated with a protocol to coordinate interactions with a table during read and/or write operations. In an embodiment, a table format specifies a scope that queries against data are to be executed and/or how execution of queries with respect to data are to be performed. In an embodiment, a table format uses a catalog to maintain references to table metadata and enable (e.g., seamless) access and/or updates across various systems. For instance, as write operations add new data files to a table, a corresponding table metadata is updated.

Over time, layers of data files can accumulate within the table structure, as in cases of trickle-write scenarios and untuned writers. For instance, suppose a write operation changes data. In some scenarios, existing data is copied to a new data structure, e.g., a blob data structure, and the write operation adds data to the new data structure. In another scenario, a small file comprising the new data is added to a small file. For instance, engine configuration, degree of parallelism, and/or memory constraints can influence a number of files generated in a bulk insert operation. In another scenario, in copy-on-write (CoW) configurations, deletions can affect distribution across files, leading to uneven file sizes. Merge-on-Read configurations can generate delta files that accumulate over time. In a migration scenario, existing data is migrated into a table format. In this migration scenario, the original file structure can be preserved with the table format metadata layered on top. This could result in a suboptimal file layout. In another scenario, a table format utilizes metadata for a table to manage state, including manifests and/or manifest lists, potentially proliferating (e.g., small) files. Loading data in a table format can also impact distribution of data across files.

Numerous small files can impact engine and/or table format implementations. For instance, as the number of small files increase, the number of managed objects and frequent input-output requests increases, thereby increasing the overhead, potentially straining distributed storage systems underpinning the data lake. This can impact the performance and/or scalability of the data lake. For instance, if a component of a distributed file system maintaining file system metadata has a limited number of objects, the component experiences pressure as the file count increases. Furthermore, elevated remote procedure call (RPC) traffic generated by small files can place additional burden on the distributed file system, requiring additional components to maintain the file system metadata to effectively manage increased traffic. In some situations, small files storing a limited number of rows can also reduce the efficiency of columnar table formats as data access and storage are impacted. Moreover, the presence of these files can contribute to bloated metadata in a table format. As transactions append references to files in logs or manifests, metadata size further increases and the time to process queries or perform maintenance operations also increases, affecting performance and efficiency.

Embodiments of the present disclosure provide a framework for implementing data compaction for table formats. Compaction is a process of rewriting data files in a table to create fewer, larger files according to a target file size. Compaction can improve storage efficiency, performance in execution of queries, planning of queries, and data organization. In some implementations, compaction is referred to as de-fragmentation or defragmentation. In an aspect, one or more candidate files are analyzed. A "candidate file" is a file that is evaluated for potential compaction. Examples of candidate files include, but are not limited to, a table (e.g., a table in a data warehouse stored in a table format implementation), a partition of a table, a snapshot of a table, a group of tables, a file, a portion of a file, and/or any other grouping or subgrouping of a table or file. Statistics for downstream decision-making are extracted from the one or more candidates, resulting in a list of statistics. Example statistics include, but are not limited to, file-level metrics (e.g., a number of files in a candidate, a size of a file, a total size of a candidate, a number of tables in a file, a file type of the file, usage metrics of the candidate or file (e.g., a number of times the file or candidate is accessed, an identifier of entities (e.g., applications, query engines, user accounts, devices, and/or the like) that access the file or candidate, timestamps of access, a pattern of access and/or the like), an identifier of an account that created the file, and/or other metrics associated with files and/or candidates), table-level metrics (e.g., a size of a table (e.g., in memory), a number of columns in a table, a number of rows in a table, a type of a table, a number of partitions in a table, an associated file or candidate of the table, a type of data in the table, and/or other metrics associated with tables), partition-level metrics (e.g., an associated table of a partition, a data type of data in the partition, a number of columns and/or rows in the partition, associated partitions, and/or other metrics associated with partitions), and/or other metrics for assisting in decision-making. Depending on the implementation, statistics can be from a predetermined list and/or customized (e.g., based on the system, based on services accessing the files, based on a user setting, based on a developer setting, and/or the like).

In an embodiment, compaction strategies can be determined based on these statistics. For example, candidates can be ranked according to various objectives (also referred to as "compaction objectives" herein) based at least on respective statistics. A compaction objective is a goal or limitation placed on the compaction process. For instance, example compaction objectives with respect to statistics include, but are not limited to, an objective specifying a target average file size for a candidate, an objective specifying a maximum file size for a candidate, an objective specifying a minimum file size, an objective specifying a size of memory a file of a candidate can deviate from the average file size of the candidate, an objective specifying a maximum size difference between the largest file of a candidate and the smallest file of the candidate, an objective specifying a limit on the number of files for a candidate, and/or an objective specifying another goal and/or limitation of the compaction process.

In an alternative or further embodiment, different compaction strategies are determined based on traits. Traits are characteristics that describe the current state of a candidate or a potential future state of a candidate. In embodiments, traits are determined from statistics. Examples of traits include, but are not limited to, file entropy, the estimated computational cost of rewriting data files for compaction, and/or another characteristic that describes the current or potential future state of a candidate. In these alternative or further embodiments, candidates are ranked according to compaction objectives based at least on the traits. For instance, example compaction objectives with respect to traits include, but are not limited to, an objective specifying a portion or percentage of memory the compaction process is to reduce current memory usage by, an objective specifying a timeframe or amount of time the compaction process is to be performed within, an objective specifying a computational resource limit the compaction process is to perform within, and/or an objective specifying another goal and/or limitation of the compaction process.

In an embodiment, compaction objectives are predetermined. In an embodiment, compaction objectives are defined as part of initiating the compaction process. In an embodiment, compaction objectives are based on the candidate(s) to be compacted. In an embodiment, a pre-defined ranking function is used to rank the candidates, resulting in an ordered list for compaction. The ordered list is processed and candidates are scheduled for data compaction.

As described above, layers of data files can accumulate over time. Furthermore, fragmentation of data files across multiple small files, multiple differently sized files, and/or files located in different locations can increase the time taken to access data. Further still, evaluating individual files can be costly and/or impact workloads by interrupting the workload, causing an error in the workload, or otherwise disrupting the workload. In an aspect, a compaction framework is implemented in a manner to address these issues. For instance, in an embodiment, a compaction framework (e.g., utilizing a file compactor) (1) identifies fine-grained work units; (2) supports multiple compaction strategies; (3) supports periodic and/or post-write execution triggers; (4) is extensible; (5) provides explanation; and/or (6) supports cross-platform compatibility.

**Fine-Grained Work Unit Identification:** In embodiments, a file compactor automatically selects candidates for compaction based on analysis of data. Furthermore, in an aspect, the file compactor identifies fine-grained work units, thereby ensuring compaction is executing an appropriate level of granularity. By breaking compaction workloads into smaller, sub-table work units, such an implementation of a file compactor can effectively distribute compaction tasks across multiple segments from different large tables or different partitions of the same table. This approach can improve parallelism and resource utilization, allowing the system to prioritize impactful segments across multiple tables. Furthermore, a smaller work unit can require fewer resources to implement, improving performance in a resource-constrained environment. Further still, fault tolerance is improved by reducing need for a full restart if a failure or conflict occurs as some of the smaller work units can already be completed prior to failure, reducing repeated expenditure of compute resources to perform the same task.

Multiple Compaction Strategy Support: Some embodiments of the present disclosure support various compaction strategies. In some implementations, benefits and/or costs are evaluated to determine an objective for a compaction strategy. For instance, greedy prioritization of compaction of tables can be utilized in a benefit-based trigger. In an example resource-constrained situation using greedy prioritization, a trigger can factor compute-cost to prioritize operations that yield higher benefits relative to cost. In an implementation, compaction strategy type can be dynamically updated.

Periodic and/or Post-Write Execution Trigger Support: In some embodiments, a file compactor can support periodic and trigger-based file compaction. For instance, periodic file compaction can be utilized to improve data layout optimization on a defined schedule, reducing excessive fragmentation from accumulating over time and offering predictable cost management. Post-write execution can enable immediate data reorganization, improve performance and reducing rapid increase in the number of files after significant data ingestion. In a non-limiting example embodiment, a file compactor periodically performs file compaction and includes a configuration to implement post-write execution if a number of files increases by a predetermined amount (e.g., a predetermined number, a predetermined percentage of storage capacity, a predetermined percentile increase over a previous number of files, and/or the like).

**Extensibility:** In accordance with an embodiment, a file compactor is able to integrate with various compaction strategies, workloads, data lake types, and/or the like. For instance, in an embodiment, a file compactor can mix and match components (e.g., compaction strategies, scheduling policies, and/or the like) to improve or implement file compaction.

**Explainability:** In some embodiments, the file compactor uses deterministic decision making to produce consistent compaction decisions under similar or identical input conditions. This deterministic decision making can simplify debugging, testing, benchmarking, and documenting of a file compactor's performance. In an embodiment, a file compactor generates a compaction decision explanation document or response indicating deterministic conditions that resulted in the automatic compaction actions.

**Cross-Platform Compatibility:** In some embodiments, a file compactor is cross-compatible with multiple table formats and catalog implementations. This can allow the file compactor to adapt to a wide range of deployment environments. Furthermore, a file compactor that is cross-platform compatible can operate in implementations where a system is migrating from one type of deployment environment to another.

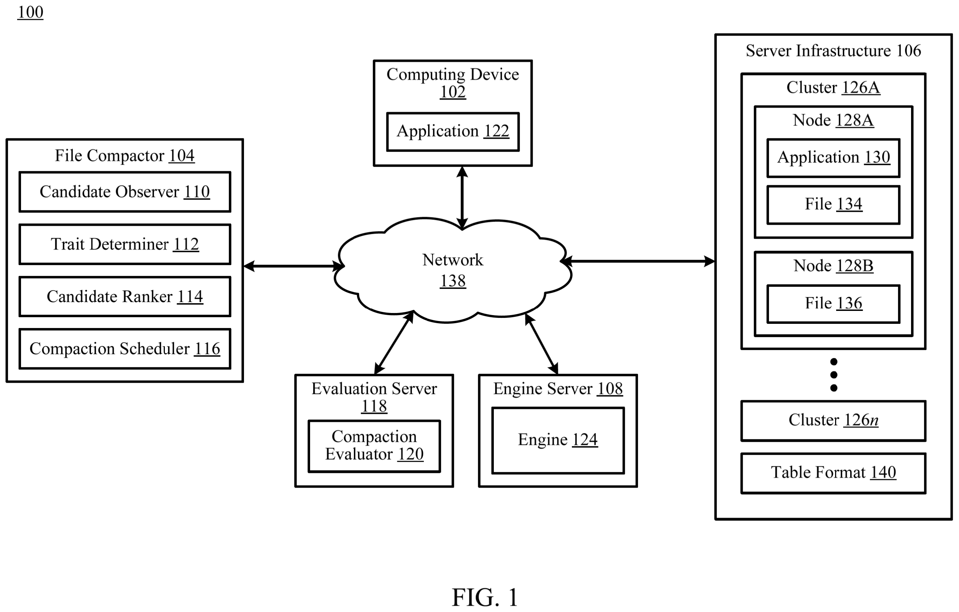

Embodiments described herein are configurable in various ways to automatically compact files. For instance, FIG. 1 is a block diagram of a system 100 configured to automatically compact files. As shown in FIG. 1, system 100 comprises a computing device 102, a file compactor 104, a server infrastructure 106, an engine server 108, and an evaluation server 118, each of which are communicatively coupled by a network 138. In examples, network 138 comprises one or more networks such as local area networks (LANs), wide area networks (WANs), enterprise networks, the Internet, etc. In examples, network 138 comprises one or more wired and/or wireless portions. The features of system 100 are described in detail as follows.

Server infrastructure 106 comprises one or more servers configured to host services and/or store data. In an embodiment, server infrastructure comprises collocated servers (e.g., in a data center, in a data center room, in a local storage of an enterprise system, and/or the like). Alternatively, server infrastructure comprises servers distributed across multiple locations (e.g., multiple data centers, multiple storage locations of an enterprise system, and/or the like). In an embodiment, server infrastructure 106 stores a data lake or database of files.

Servers of server infrastructure 106 are configured as physical nodes of the server infrastructure 106. In an embodiment, servers host applications, host virtual nodes, store data, and/or provide other services for a service provider associated with server infrastructure 106. In some embodiments, servers are grouped into clusters. For instance, as shown in FIG. 1, server infrastructure 106 comprises a cluster 126A and a cluster 126n ("clusters 126A-n" herein). Clusters of clusters 126A-n can include any number of nodes including ones, tens, hundreds, thousands, millions, or even greater number of nodes. Furthermore, clusters can include nodes of a single type (e.g., physical machines or virtual machines) or different types (e.g., physical machines and virtual machines). In some embodiments, a cluster is divided into multiple sub-clusters.

As illustrated in FIG. 1, cluster 126A comprises nodes 128A and 128B; however, a as stated above, clusters can comprise any number of nodes. Depending on the implementation, nodes 128A and/or 128B are physical or virtual nodes. In embodiments, nodes host services or store data. For instance, as shown in FIG. 1, node 128A hosts an application 130 and stores a file 134 and node 128B stores a file 136.

Files stored by nodes of server infrastructure 106 (e.g., file 134, file 136, other files not shown in FIG. 1 for brevity) are managed by or according to a table format. For instance, as shown in FIG. 1, files of server infrastructure 106 are managed by a table format 140. Table format 140 enables structured data to be stored in a storage solution while remaining organized for external query engines.

In examples, computing device 102 is any type of stationary or mobile processing device, including, but not limited to, a desktop computer, a server, a mobile or handheld device (e.g., a tablet, a personal data assistant (PDA), a smart phone, a laptop, etc.), an Internet-of-Things (IoT) device, etc. In accordance with an embodiment, computing device 102 is associated with a user (e.g., an individual user, a group of users, an organization, a family user, a customer user, an employee user, an admin user (e.g., a service team user, a developer user, a management user, etc.), etc.). Computing device 102 is configured to execute an application 122. In accordance with an embodiment, application 122 enables a user to interface with file compactor 104, server infrastructure 106, engine server 108, and/or evaluation server 118.

Engine server 108 and evaluation server 118 are network-accessible servers or other type of computing devices. In accordance with an embodiment, one or more of engine server 108 and/or evaluation server 118 are incorporated in a network-accessible server set (e.g., a cloud-based environment, an enterprise network server set, and/or the like) (e.g., server infrastructure 106). In an embodiment, and as shown in FIG. 1, each of engine server 108 and evaluation server 118 are a single server or other computing device. In an alternative example embodiment, engine server 108 and evaluation server 118 are implemented across multiple servers or computing devices (e.g., as distributed servers) or integrated in as a single server. Each of engine server 108 and evaluation server 118 are configured to execute services and/or store data. For instance, as shown in FIG. 1, engine server 108 is configured to execute an engine 124 and evaluation server 118 is configured to execute a compaction evaluator 120. In an embodiment, engine 124 is a database engine. In accordance with an embodiment, application 122 interfaces with engine 124 and/or compaction evaluator 120 over network 138.

File compactor 104 is a computer-implemented service, component, or combination of services and components. File compactor 104 is configured to compact or cause compaction of files in a data lake. As shown in FIG. 1, file compactor 104 comprises a candidate observer 110, a trait determiner 112, a candidate ranker 114, and a compaction scheduler 116, each of which are implemented as components and/or subservices of file compactor 104.

Candidate observer 110 is configured to generate candidate files for compaction and determine statistics (e.g., file-level metrics, table-level metrics, partition-level metrics, usage metrics, and/or the like) of the candidate files. As described herein, candidate files are files to be compacted or to be evaluated for potential compaction. In some embodiments, candidate observer 110 is configured to identify a candidate file that is a portion of a file or table. For example, suppose a large table (e.g., a table with a file size or row size above a predetermined threshold) comprises two or more partitions. In this context, scoping a candidate file at the partition level can enable parallel processing of multiple compaction tasks as compaction of the different partitions are evaluated. In some embodiments, candidate files are evaluated at a scope of a snapshot level. A snapshot is a copy of a file, table or partition at a point in time or timestamp. This can be beneficial, for example, when fresh data is frequently accessed. By evaluating the snapshot of the fresh data, such embodiments ensure performance objectives are met for the fresh/updated subset of data. Depending on the implementation, a candidate can be generated for a single scope (e.g., group level, table level, partition level, snapshot level, and/or the like) or a combination of scopes within a workflow. Evaluating compaction for a single scope can simplify downstream scheduling, as a single scope is evaluated. Evaluating compaction for multiple scopes increases the flexibility of scheduling as some files/tables can benefit from different scoping strategies. For example, a large or complex table can benefit from partition level evaluation more than a smaller table with a single partition, while the smaller table can benefit more from table level evaluation.

Trait determiner 112 is configured to determine traits based at least on statistics and/or candidate files determined by candidate observer 110. Traits are utilized for ranking or prioritizing compaction, in embodiments. In some embodiments, trait determiner 112 utilizes multiple statistics to determine a trait.

Candidate ranker 114 is configured to rank candidates based on traits determined by trait determiner 112. Depending on the implementation, candidate ranker 114 utilizes a single trait to rank a candidate or multiple traits to rank a candidate. For instance, in an embodiment, candidate ranker 114 performs a cost-benefit analysis based at least on multiple traits to rank the candidates.

Compaction scheduler 116 is configured to schedule and/or cause compaction actions based on rankings and/or selections made by candidate ranker 114. Example compaction actions include, but are not limited to, joining two or more files, erasing a redundant file, splitting data in one file among two other existing files, updating metadata that indicates a location of data in a file, compacting data into a group based on a clustering configuration, compacting data in different tables or partitions based on certain tables, and/or any other operation associated with the compaction of files. A compaction action is an action performed with respect to one or more candidate files that causes compaction of the one or more candidate files. Depending on the implementation, compaction scheduler 116 performs the compaction action or causes another component or service to perform the compaction action. For instance, in an embodiment, compaction scheduler 116 causes engine 124 to perform the compaction action. In another embodiment, compaction scheduler 116 causes a table format to perform a compact action. In this context, compaction scheduler 116 specifies a file, table, or partition to be compacted.

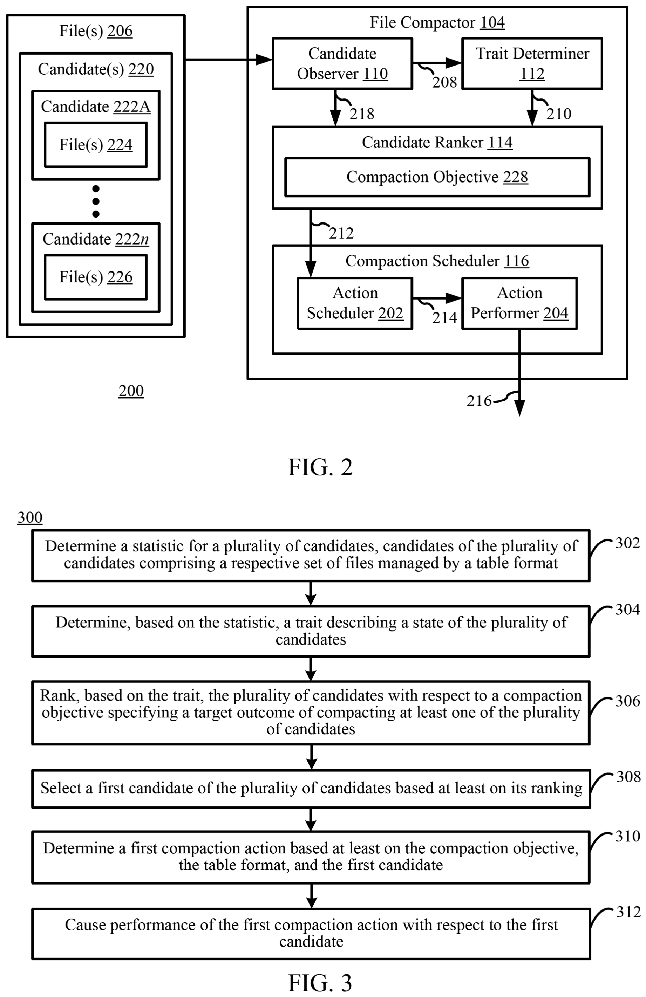

Embodiments of file compactor 104 are configured in various ways to perform or otherwise cause compaction actions with respect to one or more candidate files. For example, FIG. 2 shows a block diagram of a system 200 comprising file compactor 104, in accordance with an example embodiment. As shown in FIG. 2, file compactor 104 comprises candidate observer 110, trait determiner 112, candidate ranker 114, and compaction scheduler 116, as described with respect to FIG. 1, as well as one or more files 206 ("files 206" herein). As also shown in FIG. 2, compaction scheduler 116 comprises an action scheduler 202 and an action performer 204, each of which are implemented as subservices/subcomponents of compaction scheduler 116. As further shown in FIG. 2, files 206 comprise one or more candidates 220 ("candidates 220" herein), comprising at least a candidate 222A and a candidate 222n. Candidates 220 are potential sets of files to be compacted or evaluated for potential compaction by file compactor 104. As shown in FIG. 2, candidate 222A comprises one or more files 224 (also referred to as "files 224" or "file set 224" herein) and candidate 222n comprises one or more files 226 (also referred to as "files 226" or "file set 226" herein). In an embodiment, file set 224 comprises file 134 of FIG. 1 and file set 226 comprises file 136 of FIG. 1. In an embodiment, files 206 are managed by table format 140 of FIG. 1.

To better understand the operation of file compactor 104 of FIG. 2, FIG. 2 is described with respect to FIG. 3. FIG. 3 shows a flowchart 300 of a process for compacting a candidate file, in accordance with an example embodiment. In accordance with an embodiment, file compactor 104 of FIG. 2 operates according to flowchart 300. Not all steps of flowchart 300 need be performed in all embodiments. Further structural and operational embodiments will be apparent to persons skilled in the relevant art(s) based on the following descriptions of FIGS. 2 and 3.

Flowchart 300 begins with step 302. In step 302, a statistic for a plurality of candidates is determined, the candidates of the plurality of candidates comprising respective sets of files managed by a table format. For example, candidate observer 110 receives files 206 comprising candidates 220, candidates 220 comprising candidates 220, each comprising respective sets of files managed by table format 140 (e.g., candidate 222A comprising file set 224, candidate 222n comprising file set 226, etc.). Candidate observer 110 determines one or more statistic(s) 208 ("statistics 208" herein) based on candidates generated from one or more file(s) 206 ("files 206" herein). As described herein, candidate files are files to be compacted or to be evaluated for potential compaction. Candidate observer 110 determines statistics 208 based on candidate files generated from files 206.

In some embodiments, candidate observer 110 determines statistics for a candidate file, such as based on a characteristic of the database engine or platform. In an embodiment, a standardized layout for statistics is utilized in statistic extraction. An example of a standardized layout is a variable representative of the statistic, an identifier of the candidate file, and a value for the variable based on the candidate file. For instance, a "FileSize" statistic for a candidate "c" can be represented as follows:

$$FileSize_c = 492$$

In this example, $FileSize_c$ represents the size of candidate file c in MB, e.g., 492 MB. The standardized layout can support different types of statistics described elsewhere herein. In an embodiment, candidate observer utilizes a (e.g., mathematical) model, rule, or other logic to determine a statistic for candidates 220 based at least on one or more of files 206. In an example where a model is used to determine statistics, the model utilizes mathematical rules to determine statistics based on information received for candidates 220. In another example where a model is used to determine statistics, the model is trained utilizing existing or synthetic data. Additional details regarding training a model are described in Section VII, Sub-section J. In an embodiment, candidate observer measures or calculates the one or more statistics for one or more of files 206.

In step 304, traits are determined based on the statistic. For example, trait determiner 112 determines one or more traits 210 ("traits 210") based at least on statistics 210. Example traits include, but are not limited to, traits that describe a benefit of a compaction operation (e.g., file count reduction, file entropy, and/or the like), traits that represent a cost of a compaction operation (e.g., a compute cost), traits that describe a state of the plurality of candidates, and/or the like. For instance, in an aspect, a value of the trait for candidate 222A describes a state of candidate 222A and a value of the trait for candidate *222n* describes a state of candidate *222n.* Example states include, but are not limited to, a state indicating a percentage of fragmentation, a state indicating a degree of fragmentation, a state indicating an accessibility of files of the candidate (e.g., whether or not the files are encrypted or restricted), a state indicating the candidate is corrupted, a state indicating the candidate is read-only. In an aspect, a trait is utilized to prioritize or rank a candidate. In an aspect, a trait is defined independent of other traits. As described further herein, in some implementations, two or more traits are combined in the ranking process. In an aspect, cost-benefit analysis is performed to select from among the candidates.

In an embodiment, trait determiner 112 utilizes one or more models, rules, and/or other logic to determine traits based on statistics determined in step 302. For example, in an embodiment, trait determiner 112 utilizes mathematical equations to determine traits for candidates. In an embodiment, the mathematical equations are parts of a mathematical model. Example mathematical equations are described as follows with respect to Equations 1-3, as well as elsewhere herein. With respect to file count reduction, for a given compaction candidate c, trait determiner 112 calculates an estimated reduction in file count after compaction. In an implementation, file count is denoted using the following equation:

$$\Delta F_c = \sum_{i=1}^{FileCount_c} 1\left(FileSize_{i,c} < TargetFileSize_c\right) \qquad \text{Equation 1}$$

In aspects, a target file size is a configurable parameter, such as a parameter selected based on system setup or other factors. For instance, in a non-limiting distributed file system deployment implementation, the target file size is determined based at least on a setting of a size of a file chunk stored on a data node in a cluster (e.g., a "block size"). In an implementation a rule is determined to match the target file size to the block size. In an aspect, target file size is adjusted or set based on workload characteristics.

The file entropy trait is a measure of deviation of a candidate from its optimal or expected data layout. In an embodiment, file entropy is calculated as the difference for each file of the candidate from its target file size. In an aspect, the difference is normalized to compute the mean-squared error. For instance, in an aspect, $FileEntropy_c$ for a candidate c is determined using the following equation:

$$FileEntropy_c = \frac{1}{N}\sum_{i=1}^{N}\left(TargetFileSize_c - DataSize_{fi}\right)^2 \qquad \text{Equation 2}$$

In Equation 2, *N* represents the number of files in the candidate c and $DataSize_{fi}$ is the current size of the $i^{th}$ file in the candidate. In an aspect, file entropy is utilized to determine which candidates should be prioritized for compaction.

The compute cost trait is a measure of compute resource cost of compaction actions considered in compaction of a candidate. Some embodiments described herein utilize the compute cost trait in cost-benefit analysis for candidate selection. For instance, if a first candidate yields a different file count reduction (e.g., a reduction in 200 files) than a second candidate (e.g., a reduction in 100 files) but share similar compute costs, the table with the greater reduction is prioritized. However, if the compute costs for the first candidate is higher, the benefit/cost ratio indicates the second candidate should be prioritized. In a further embodiment, the compute cost trait indicates a percentage by which the compute cost for the first candidate exceeds a target compute cost. In resource-constrained scenarios, compaction tasks are managed within available capacity. In an aspect, a candidate with a compute cost that exceeds an allocated budget is automatically discarded or flagged for further review to determine if the high compute cost is worth the benefit of the compaction.

Compute cost can be calculated in various ways, in embodiments. For instance, in an aspect, trait determiner 112 calculates compute cost for a candidate c (denoted as $GBHr_c$) utilizing the following equation.

$$GBHr_c = \text{ExecutorMemoryGB} \times \left(\frac{DataSize_c}{RewriteBytesPerHour}\right) \qquad \text{Equation 3}$$

In Equation 3, *ExecutorMemoryGB* represents the memory allocated to executors for processing the compaction task and *RewriteBytesPerHour* indicates the system's throughput in terms of bytes that can be processed per hour.

In step 306, the plurality of candidates is ranked with respect to a compaction objective based on the trait. For example, candidate ranker 114 ranks candidates 220 with respect to a compaction objective 228 based on traits 210. Compaction objective 228 specifies a target outcome of compacting at least one of the candidates 220. In an embodiment, candidate ranker 114 generates one or more rankings 212 ("rankings 212") based on traits 210. In an embodiment, ranking is object-oriented. Rankings are utilized, in some implementations, to prioritize compaction actions with respect to candidates. Depending on the implementation, unconstrained resource availability and/or resource-constrained compaction systems are utilized for ranking.

As described herein, compaction objective 228 specifies a target outcome of compacting at least one of candidates 220. Example compaction objects include, but are not limited to, lowering fragmentation of files 206 below a threshold, reducing redundant files, reducing a size of one or more files of files 206 below a threshold, lowering fragmentation of files 206 by a predetermined percentage, improving normalization of file sizes within a candidate, and/or another objective to improve storage of files 206 by a data store, access of files 206, defragmentation of files, and/or the like.

In an unconstrained resource availability implementation, candidate ranker 114 operates without resource constraints. In this aspect, candidate ranker 114 utilizes a decision function to select candidates for compaction when a trait exceeds (or, in an alternative, meets and/or exceeds) a predefined threshold. For instance, suppose an engine configured to maintain query performance sets a target to trigger compaction when the estimated file count reduction reaches at least 10%. In this scenario, when a table update occurs, candidates and their traits are determined and candidate ranker 114 passes candidates with a potential file count reduction of 10% or more to compaction scheduler 116. In the unconstrained resource availability implementation, file counts are proactively minimized.

In a resource-constrained scenario, candidate ranker 114 ranks candidates based on a combination of traits. For instance, candidate ranker 114 in an example can rank candidates to maximize file count reduction while minimizing compute cost (e.g., maximize file count reduction within a range of compute costs or within a compute cost limit, minimize compute cost with at least a certain file count reduction amount, and/or the like) and/or any other combination of balancing two or more traits. In an aspect, candidate ranker 114 aligns compaction tasks with available capacity. In an aspect, candidate ranker 114 utilizes a Multi-Objective Optimization Problem (MOOP). In an aspect, a single-objective function using a weighted sum to simplify prioritization is used. In another aspect, the MOOP is scalarized into the single-objective function.

In an aspect, traits are normalized using a min-max normalization as follows:

$$T'_{i,c} = \frac{T_{i,c} - \min(T_i)}{\max(T_i) - \min(T_i)} \qquad \text{Equation 4}$$

In Equation 4, $T_{i,c}$ represents the actual value of trait *i* for candidate c, and $T'_{i,c}$ is its normalized value. This normalization scales trait values to a range of [0,1].

Weights, $w_i$, are defined for objectives, in an aspect. For instance, in an embodiment, the weights are defined such that $\Sigma(w_i) = 1$. These weights indicate the relative importance of each trait within the MOOP function. In an embodiment, weights are dynamically adjustable to reflect priorities of a system or workload. As an example, consider a MOOP function that maximizes the file count reduction while minimizing the associated compute cost. A scalarized score, $S_c$ for a candidate c in this example is expressed as:

$$S_c = w_1 \times T'_{1,c} - w_2 \times T'_{2,c} \qquad \text{Equation 5}$$

In Equation 5, $T'_{1,c}$ represents normalized file count reduction and $T'_{2,c}$ represents normalized compute cost. In an embodiment, candidate ranker 114 ranks candidates in descending order based on $S_c$, with higher scores indicating better performance relative to the specified objectives. In an embodiment a weight is adjusted based on a quota or other statistic. In an example, a file count reduction weight is determined/adjusted based on a quota utilization of a database. In this example, the quota utilization is measured by the total number of files or namespace objects the database contains.

In an embodiment, candidate ranker 114 determines a compute budget based on a cluster's characteristics. For instance, an implementation of candidate ranker 114 determines a compute budget according to the following equation:

$$BudgetGBHr = ExecutorMemoryGB \times HoursToCompact \quad \text{Equation 6}$$

Other implementations of candidate ranker 114 determine a compute budget in other ways. For instance, a budget can vary depending on the production environment. For example, a production system can utilize a fixed budget determined by a capital expenditure (CapEx) budget and/or an organization budget. In this context, candidate ranker 114 ranks a candidate higher if its compaction is within the resource constraints of the CapEx and/or organization budget(s).

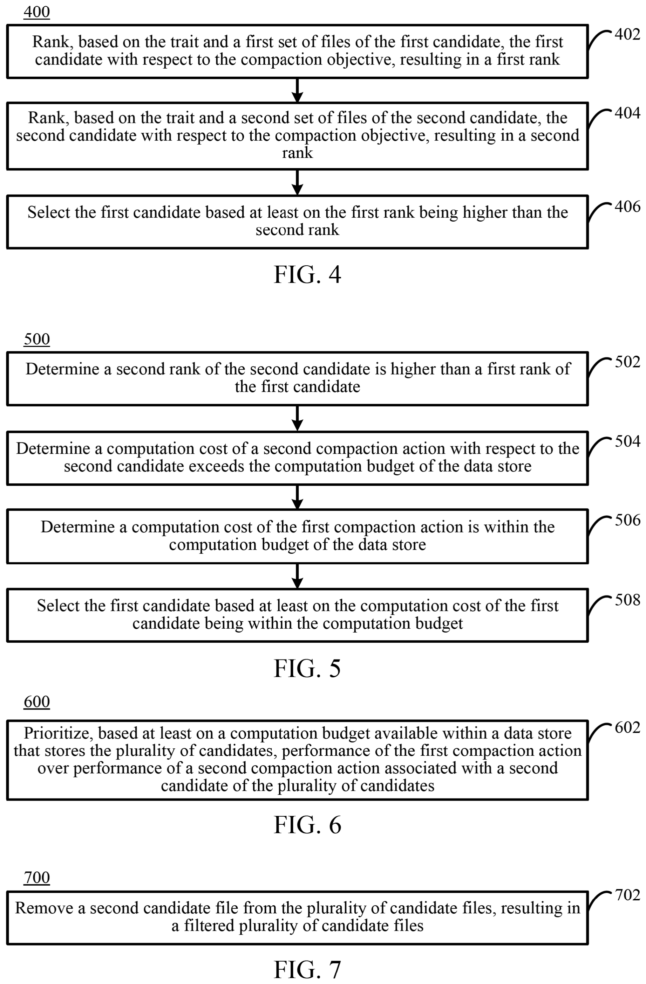

In step 308, a first candidate of the plurality of candidates is selected based at least on its ranking. For instance, action scheduler 202 of FIG. 2 selects a candidate from candidates 220 based at least on rankings 212. In an embodiment, action scheduler 202 selects multiple candidates. For example, an implementation of candidate ranker 114 selects a subset of ranked candidates. For instance, in an embodiment, candidate ranker 114 in an implementation selects the top-k ranked candidate compaction tasks, where k represents the maximum number of candidates that can be selected within a given budget. In an embodiment, *k* has a default value. Alternatively, *k* is determined based on a user setting. In another embodiment, k is automatically determined according to a rule. Examples of such rules include, but are not limited to, a rule that limits the number of compaction actions to be performed, a rule that limits the number of candidates compaction actions are to be performed with respect to, a rule that specifies a maximum compute resource usage or time, and/or the like. In an embodiment, a greedy heuristic selection function is used to select the candidate compaction tasks. In this context, the greedy heuristic selection function selects as many high-priority compaction tasks within the budget as possible. Additional details regarding selecting one or more candidates are described with respect to FIGS. 4 and 5, as well as elsewhere herein.

By integrating multi-objective considerations into ranking, candidate ranker 114 improves compaction decisions by aligning compaction to improved performance and resource efficiency. For instance, in an embodiment, candidate ranker 114 dynamically adapts compaction to fit within operational constraints with respect to shifting priorities.

In step 310, a first compaction action is determined based at least on the compaction objective, the table format, and/or the first candidate. For example, action scheduler 202 of FIG. 2 determines a compaction action 216 based at least on compaction objective 228, table format 140, and/or the one or more candidates selected in step 308. In an embodiment, the compaction action is defined by compaction objective 228. In an embodiment, action scheduler generates a schedule 214 that specifies compaction action 216 to be performed with respect to the selected one or more candidates. In an embodiment, schedule 214 specifies a level of priority compaction action 216 is to be performed. In an embodiment, schedule 214 specifies a deadline or time by which compaction action 216 is to be performed.

While step 310 is shown in FIG. 3 as being subsequent to step 308 and prior to step 310, it is noted herein that in some implementations, steps of one or more flowcharts can be performed in different orders than depicted in the respective figures. For instance, in an embodiment, step 310 is performed prior to or as part of step 306. For example, in an embodiment, candidate ranker 114 determines a compaction action to be performed with respect to a candidate based on compaction objective 228, the candidate and/or table format 140 and determines the rank for the candidate based at least on the determined compaction action.

In step 312, a performance of a compaction action is caused with respect to a candidate based on a ranking of the candidate. For example, action performer 204 of FIG. 2 causes compaction action 216 to be performed with respect to the selected candidate based on a ranking of the candidate. For instance, in an embodiment, action performer 204 conducts compaction action 216 with respect to the candidate. Alternatively, action performer 204 causes another component or device of the system to perform compaction action 216 with respect to the candidate. In an embodiment, compaction action 216 is performed or caused to be performed based on schedule 214 received from action scheduler 202, resulting in a compacted file. By automatically compacting files, embodiments described herein reduce the number of file counts (e.g., by reducing the number of small files, redundant files, and/or the like), improve file size (e.g., by breaking down files above a size limit, by combining files below a size limit into a file size that satisfies a threshold, by adjusting files so that an average file size in a candidate file is within a threshold percentage or number (e.g., at 500 MB, within a predetermined number of MB of 500 MB, and/or the like), and/or the like), and/or the like. For instance, suppose a partition comprises ten files and one file is 10 GB and the other files are approximately 1 MB. In this example, action performer 204 performs compaction actions to redistribute data across the files within an amount (e.g., a number of files that are no more than 500 MB (resulting, in this example, in twenty one files that are near 500 MB in size)). This compaction can reduce excessive network traffic, e.g., as the number of small files a database engine has to access are reduced. Furthermore, namespace quotas are able to be met as the number of namespaces used are reduced. In another aspect, as the number of objects are reduced, a file system federating to distribute the load is less likely to occur. In another example, if the file count is reduced, fewer files are scanned during query execution with respect to a table format.

In some embodiments, action scheduler 202 or another component of compaction scheduler 116 selects the candidate compaction is to be scheduled for from a set of ranked candidates received from candidate ranker 114. In an embodiment, compaction scheduler 116 schedules compaction of a candidate within the cluster the candidate is included in. Alternatively, compaction scheduler 116 offloads (e.g., transfers) compacted candidates to a compaction cluster. A compaction cluster is a cluster of compute resources specified for performing compaction actions. In this alternative, user experience and/or application performance is less likely to be impacted in high write operation volume and resource utilization implementations. In accordance with an embodiment, compaction scheduler 116 determines if write operation volume and/or resource utilization satisfies a criterion (e.g., is above a threshold, has occurred within a predetermined time, is expected to occur within a predetermined time, and/or the like). If so, the compaction is offloaded to a compaction cluster. If not, compaction is performed within the cluster the candidate is included in.

In some embodiments, compaction scheduler 116 is manually or automatically configurable to suit a cluster's needs. For instance, suppose a cluster is running user transactions. In this example, compaction tasks are scheduled sequentially to mitigate resource contention. In some setups, compaction is scheduled during off-peak hours or low-use hours.

In some embodiments, the type of table format influences compaction scheduler 116's schedule of compaction tasks. For instance, in a non-limiting example, suppose file compactor 104, a component thereof, a service provider of database 146, a developer of file compactor 104, a development application associated with file compactor 104, database engine of engine server 108, and/or the like determines a likelihood of concurrent compaction operations performed with respect to a type of table format causing conflicts (e.g., coherency conflicts and/or the like) is above a threshold. In this non-limiting example, compaction scheduler 116 schedules compaction tasks with respect to that type of table to reduce the likelihood of a conflict by scheduling tasks sequentially instead of concurrently and/or the like. In another implementation, file compactor 104 schedules compaction tasks based on a conflict resolution mechanism of a table format.

As shown in FIG. 2 and as described with respect to flowchart 300, in an embodiment, file compactor 104 ranks a plurality of candidates based on a trait describe a state of the candidates. In an alternative embodiment, file compactor 104 ranks the plurality of candidates based on the statistics for the plurality of candidates. For instance, as optionally shown in FIG. 2, candidate observer 110 provides statistics 218 to candidate ranker 114. Statistics 218 can comprise similar statistics as statistics 208, in embodiments. In this example, candidate ranker 114 ranks candidates based at least on statistics 218 to generate rankings 212, in a similar manner as described with respect to step 306 with respect to traits.210. In this further example, file compactor 104 can generate rankings and determine compaction action using fewer compute resources, as traits are not required to be determined. In a further embodiment, candidate ranker 114 generates rankings 212 based on traits 210 and statistics 218. In this further example, file compactor 104 considers statistics of candidates on a broader level in addition to traits determined from the statistics. This combined analysis can improve the ranking results of candidate ranker 114 with respect to compaction objective 228.

III. Candidate Selection and Prioritization Embodiments

As described herein, action scheduler 202 selects one or more candidates for compaction among candidates ranked by candidate ranker 114. Action scheduler 202 can operate in various ways to select a candidate, in embodiments. For instance, FIG. 4 shows a flowchart 400 of a process for selecting a candidate file, in accordance with an example embodiment. In an embodiment, file compactor 104 operates according to flowchart 400. Note not all steps of flowchart 400 need be performed in all embodiments. Further structural and operational embodiments will be apparent to persons skilled in the relevant art(s) based on the following description of FIG. 4 with respect to FIG. 2.

Flowchart 400 begins with step 402. In step 402, the first candidate is ranked with respect to the compaction objective based at least on the trait and a first set of files of the first candidate, resulting in a first rank. For example, in an embodiment, candidate ranker 114 ranks candidate 222A based at least on a trait of traits 210 and file set 224, resulting in a first rank. In an embodiment, candidate ranker 114 ranks candidate 222A utilizing one of the techniques described with respect to step 306 of flowchart 300 of FIG. 3 and/or elsewhere herein. In an embodiment, the first rank is an ordered number with respect to other candidates ranked by candidate ranker 114. In another embodiment, the first rank is a rating along a scale, such as on a scale of 1 to 10, of 0 to 5, of 0 to 100, of 0.00 to 1.00, and/or the like. In an embodiment, the first rank is included in rankings 212.

In step 404, a second candidate of the plurality of candidates is ranked with respect to the compaction objective based at least on the trait and a second set of files of the second candidate, resulting in a second rank. For example, in an embodiment, candidate ranker 114 ranks candidate 222n based at least on a trait of traits 210 and file set 226, resulting in a second rank. In an embodiment, candidate ranker 114 ranks candidate 222n in a similar manner as candidate 222A was ranked in step 402. In an embodiment, the second rank is included in rankings 212.

In step 406, the first candidate is selected based at least on the first rank being higher than the second rank. For example, in accordance with an embodiment, action scheduler 202 selects candidate 222A based at least on the first rank of candidate 222A being higher than the second rank of candidate 222n. In an embodiment, action scheduler 202 generates schedule 214 comprising instructions to perform compaction action 216 with respect to candidate 222A based at least on the selection. In an embodiment, action scheduler 202 prioritizes compaction action 216 based at least on the selection.

As described herein, action scheduler operates in various ways to select a candidate, in embodiments. For instance, FIG. 5 shows a flowchart 500 of a process for selecting a candidate file, in accordance with another example embodiment. In an embodiment, file compactor 104 operates according to flowchart 500. Note not all steps of flowchart 500 need be performed in all embodiments. Further structural and operational embodiments will be apparent to persons skilled in the relevant art(s) based on the following description of FIG. 5 with respect to FIG. 2.

Flowchart 500 begins with step 502. In step 502, a second rank of the second candidate is determined to be higher than a first rank of the first candidate. For example, in accordance with an embodiment, action scheduler 202 of FIG. 2 determines a rank of candidate 222n is higher than a rank of candidate 222A.

In step 504, a computation cost of a second compaction action with respect to the second candidate is determined to exceed the computation budget of the data store. For example, in accordance with an embodiment, action scheduler 202 determines a computation cost of a second compaction action with respect to candidate 222n exceeds a computation budget of the data store storing files 206 or a device/service that is to perform the compaction action (e.g., action performer 204). In an embodiment, the computation budget represents an available amount of compute resources for performing compaction actions, such as a portion of processing power allocated for performing compaction actions, a number of devices available for performing compaction actions, etc. In another embodiment, the computation budget represents an amount of time a number of compute resources are available for performing compaction actions. In another embodiment, the computation budget is based on an estimated utilization of files of candidate 222n. For instance, in an embodiment, a frequency of utilization of files of candidate 222n exceed an expected time by which compute resources of action performer 204 can perform the second compaction action.

In step 506, a computation cost of the first compaction action is determined to be within computation budget of the data store. For example, in an embodiment, action scheduler 202 determines a computation cost of compaction action 216 is within a computation budget of the data store storing files 206 and/or a device/service that is to perform compaction action 216 (e.g., action performer 204).

In step 508, the first candidate is selected based at least on the computation cost of the first compaction action being within the computation budget. For example, in an embodiment, action scheduler 202 selects candidate 222A based at least on the computation cost of compaction action 216 being within the available computation budget.

In some embodiments, action scheduler 202 selects multiple compaction actions to be performed based on the available computation budget. For instance, in the example described with respect to flowchart 500, suppose the computation cost of compaction action 216 is below the available computation budget. In an embodiment where action scheduler 202 selects multiple compaction actions, action scheduler 202 determines a remainder of the computation budget based on the total available computation budget and the computation cost of compaction action 216. Action scheduler 202 then determines if a computation cost of another compaction action of another ranked candidate is less than or equal to the remainder of the computation budget (also referred to as "remainder computation budget" or "remaining computation budget" herein). For instance, suppose a third compaction action associated with a third candidate having a rank below the first candidate (e.g., the next candidate in rankings 212) has a computation cost equal to or below the remaining computation budget. In this context, action scheduler 202 schedules the third compaction action to be performed by including instructions to perform it in schedule 214 or in another schedule. This process continues until the remaining computation budget is utilized or no ranked candidates with associated computation actions that can be performed within the remaining computation budget are identified. By searching for additional candidates amongst ranked candidates in this manner, such embodiments of action scheduler 202 are able to increase utilization of available computation budget to reduce fragmentation in files 206, thereby improving efficiency in file compaction of the system.

In embodiments, compaction scheduler 116 or a component/subservice thereof schedules compaction actions to be performed. In an embodiment, a scheduled compaction action is prioritized over another scheduled compaction action. Compaction scheduler 116 operates in various ways to prioritize a compaction action, in embodiments. For example, FIG. 6 shows a flowchart 600 of a process for prioritizing a compaction action, in accordance with an example embodiment. In an embodiment, compaction scheduler 116 operates according to flowchart 600. Note not all steps of flowchart 600 need be performed in all embodiments. Further structural and operational embodiments will be apparent to persons skilled in the relevant art(s) based on the following description of FIG. 6.

Flowchart 600 comprises step 602. In step 602, performance of the first compaction action is prioritized over performance of a second compaction action associated with a second candidate of the plurality of candidates based at least on a compaction budget available within a data store that stores the plurality of candidates. For example, action scheduler 202 or action performer 204 prioritizes performance of compaction action over performance of another compaction action associated with another candidate (e.g., candidate 222n) based at least on a compaction budget available within the data store that stores the plurality of candidates or action performer 204. For example, in an embodiment, action scheduler 202 determines the priority of compaction actions when selecting candidates and generating schedule 214, as described elsewhere herein. In another embodiment, action performer 204 determines a priority of compaction actions based on a received schedule (e.g., schedule 214) and already queued/scheduled compaction actions. For instance, suppose a previous compaction action is queued to be performed but not enough compute resources are available. Further suppose action performer 204 receives schedule 214 indicating an amount of compute resources to perform compaction action 216 is equal to or below currently available compute resources. In this example, action performer 204 prioritizes performance of compaction action 216 over the previous compaction action.

IV. Candidate Filtering Embodiments

In some embodiments, a filtering mechanism is applied to the generated candidate files. The filtering mechanism reduces the number of candidates in the candidate pool based on statistics and/or table usage. In an embodiment, the candidate observer evaluates usage of a table and (e.g., selectively) applies one or more filters accordingly. For example, candidate observer 110 evaluates the impact of table deletions, table overwrites, creation of intermediate tables, and/or the like to determine redundancies, potential redundancies, conflicts and/or potential conflicts. Candidate observer 110 applies a filter to the candidate files to remove one or more files, if any, from candidacy based on the evaluation. In some embodiments, a filter mechanism is based on the platform type of database and/or database engine. For instance, in a first type of database platform, tables that are created within a predetermined time or time window. In this manner, compaction of a recently created table is determined to have a potential impact on system health below a predetermined threshold. Thus, computation resources are conserved by removing the file from consideration (e.g., and not further evaluating the file for compaction or including the file in scheduling of compaction operations).

Filtering mechanisms can be implemented and/or operate in various ways, in embodiments. For example, FIG. 7 shows a flowchart 700 of a process for filtering candidate files, in accordance with an example embodiment. In an embodiment, candidate observer 110 or trait determiner 112 operate according to flowchart 700. Note not all steps of flowchart 700 need be performed in all embodiments. Further structural and operational embodiments will be apparent to persons skilled in the relevant art(s) based on the following description of FIG. 7.

Flowchart 700 begins with step 702. In step 702, a second candidate file is removed from the plurality of candidate files, resulting in a filtered plurality of candidate files. For instance, in an embodiment, candidate observer 110 filters candidate files from those generated based on files 206. In a further embodiment, candidate observer 110 filters candidate files based on one or more of statistics 208. In another embodiment, trait determiner 112 filters the second candidate file from the plurality of candidate files based on traits 210 or values of traits 210. As described herein, a filtering mechanism is utilized to refine a candidate pool. For instance, depending on the implementation, a filtering mechanism checks the table size of the candidate to skip tables that are too small, verifies whether a compaction candidate has undergone recent frequent writes to avoid conflicts during compaction, and/or performs another operation to refine a candidate pool. In another aspect, a feedback loop from the act phase to the observe phase is used to update information for further refinement. For instance, in an embodiment, the feedback loop updates a number of partitioned files or layout changes based on compaction performed by and/or caused by the compaction scheduler. This increases refinement and performance of the compaction process. In an embodiment, the filtering mechanism skips a candidate file if a trait value is outside a predetermined threshold or range (e.g., file counts are not estimated to be reduced by at least a predetermined threshold percentage, estimated compute resources exceed a predetermined threshold, a current file size fits within a satisfactory range, and/or the like) or a combination of trait values are outside predetermined thresholds or ranges. In another example embodiment, trait determiner 112 determines a candidate of the plurality of candidates comprises one or more temporary files. Responsive to determining the candidate comprises the temporary files, trait determiner 112 removes the candidate from the plurality of candidates. This reduces the probability of redundant compaction or compaction where the compute cost of the compaction would outweigh the benefits. For instance, if a candidate file comprises temporary files, a likelihood that the files are to be deleted or modified within a predetermined time range is greater than the likelihood non-temporary files of other candidates are to be deleted or modified within the predetermined time range. By removing these candidates from the plurality of candidates considered by file compactor 104, trait determiner 112 reduces the probability of performing compaction on files that would be negated or impacted by deletion or modification compared to potential compaction on other files, thereby increasing the likelihood of the performed compaction yielding greater benefits to the system.

V. Data Compaction Timing Embodiments

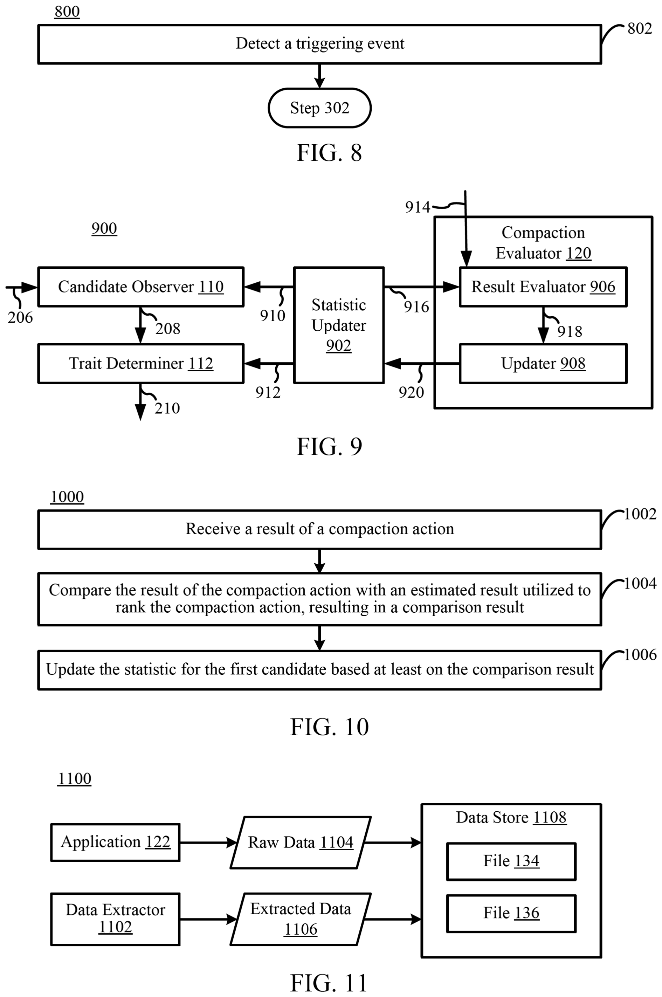

Embodiments of file compactor 104 operate in various ways to compact files. As described herein, in some embodiments, file compactor 104 automatically determines to compact files, selects the files to compact, and causes compaction of the selected files. For instance, in an embodiment, file compactor 104 determines a compaction triggering event has occurred. For example, FIG. 8 shows a flowchart 800 of a process for automatically triggering compaction, in accordance with an example embodiment. In an embodiment, candidate observer 110 or compaction scheduler 116 operate according to flowchart 800. Note not all steps of flowchart 800 need be performed in all embodiments. Further structural and operational embodiments will be apparent to persons skilled in the relevant art(s) based on the following description of FIG. 8.

Flowchart 800 begins with step 802. In step 802, a triggering event is detected. Depending on the implementation, candidate observer 110, compaction scheduler 116, or another component/service of file compactor 104 of FIG. 2 detects the triggering event. Example triggering events include, but are not limited to: receiving an indication a file has been modified from a database/data lake telemetry monitor, from a file monitoring service, from a change detector, and/or the like; determining a periodic interval has started or ended based on a time and an interval setting; determining a file count satisfies a criterion; determining a percentage of storage space usage satisfies a criterion; and/or the like.

Flowchart 800 continues to step 302, as described with respect to flowchart 300 of FIG. 3. For example, file compactor 104 evaluates a candidate file or files in response to the triggering event detected in step 802. As a non-limiting example embodiment, the triggering event is a candidate file being modified. In this non-limiting example embodiment, file compactor 104 determines to evaluate a candidate's potential for compaction subsequent to receiving an indication that the candidate file has been modified. In another non-limiting example embodiment, the triggering event is a periodic interval. In this context, file compactor 104 determines the periodic interval has been reached (e.g., a once per day interval, a weekly interval, and/or the like). In an embodiment, a trait is utilized as a trigger. For instance, if a trait value satisfies a criterion (e.g., surpasses a pre-defined threshold), file compactor 104 determines a compaction operation can be triggered. Alternatively, or additionally, file compactor 104 receives a hook indication that indicates changes have occurred in the data lake and/or with respect to the candidate. A hook is a logical indication that is detectable by file compactor 104. Examples of hooks include, but are not limited to, triggering code, application programming interface (API) calls, and/or other detectable logical indications. A further example hook is an optimize-after-write hook that indicates data has been written to a candidate. In this context, file compactor 104 re-determines statistics, recalculates traits, and/or re-ranks the candidate. By triggering based off changes in traits or files, such embodiments are able to maintain table formats in an improved state.

In some embodiments, hooks indicating changes in traits or files are decoupled from scheduling. This allows flexibility in terms of resource usage, allowing for controlled trait generation and efficient compaction task execution.

In some embodiments, file compactor 104 is implemented as an auto-compaction service that is separate from engines. This allows file compactor 104 to run independently from engines of a database/data lake. File compactor 104 evaluates whether compaction criteria is met periodically. If so, compaction is caused. This can be advantageous in scenarios with predictable compaction schedules, such as where scheduling compaction when cluster utilization is low during off-peak hours or ensuring that compaction does not interfere with other active workloads.

VI. Embodiments for Evaluating Compaction Action Performance

Some embodiments of the present disclosure utilize a model, rule, and/or other logic to determine statistics and/or traits based on at least one or more candidates and/or files. For instance, in some embodiments described herein, trait determiner 112 determines a trait as an estimation of a compaction action's performance. For instance, example estimated traits include, but are not limited to, the estimated time to perform a compaction action, the estimated file reduction by the compaction action, the estimated compute resource cost of the compaction action, and/or estimation of other traits described elsewhere herein. In an implementation of this embodiment, trait determiner 112 generates an estimate based at least on historic performance of compaction actions. In another implementation, trait determiner 112 utilizes a determined model and/or rule to generate estimates of a compaction action's performance. In an embodiment, a model is trained or rules thereof are determined based on historic data and/or synthetic workload data. In embodiments, the model and/or rule is periodically or responsively updated as more compaction actions are performed. For instance, in an embodiment, compaction evaluator 120 of FIG. 1 triggers updating of the model and/or rule in response to a compaction action's performance deviating by a threshold amount from the estimate.

In some embodiments, the model and/or rule is utilized by candidate observer 110 to generate/determine statistics. For instance, in an embodiment, candidate observer 110 utilizes a model to generate an estimation of utilization of a file or set of files, future defragmentation of a file or set of files, accesses to data of files, and/or the like. In this context, the model can be configured based on historic statistics.

Systems for updating statistic or traits (or logic for determining statistics or traits) can be configured in various ways. For example, FIG. 9 shows a block diagram of a system 900 for updating a statistic or trait, in accordance with an example embodiment. As shown in FIG. 9, system 900 comprises candidate observer 110, trait determiner 112, and compaction evaluator 120 as described with respect to FIG. 1, as well as a statistic updater 902. Depending on the implementation statistic updater 902 comprises a logic or rules for determining statistics and/or traits. In another embodiment, statistic updater 902 comprises data or other information relates to statistics or traits, such as past values of statistics or traits for one or more candidates.

In embodiments, candidate observer 110 and/or trait determiner 112 utilize statistic updater 902 to determine statistics and/or traits. For instance, in an embodiment and as shown in FIG. 9, candidate observer 110 receives statistic information 910 and determines statistics 208 for files 206 based at least on statistic information 910. Depending on the implementation, statistic information 910 comprises a (e.g., mathematical) model utilized for determining a statistic for one or more of files 206, a previous value for of a statistic for one or more of files 206, an adjusted value of a statistic for one or more of files 206, and/or other information suitable for determining a statistic for one or more of files 206. In another embodiment, and as also shown in FIG. 9, trait determiner 112 receives trait information 912 and determines traits 210 for one or more of files 206. Depending on the implementation, trait information 912 comprises a model utilized for determining a trait for one or more of files 206, a previous value of a trait for one or more of files 206, an adjusted value of a trait for one or more of files 206, and/or other information suitable for determining a trait for one or more of files 206.

Compaction evaluator 120 is configured to evaluate results of compaction actions and update statistic information or trait information based on the evaluation. As shown in FIG. 9, compaction evaluator 120 comprises a result evaluator 906 and an updater 908, each of which are implemented as subservices/subcomponents of compaction evaluator 120. Compaction evaluator 120 operates to update statistic information and/or trait information of statistic updater 902 in various ways, in embodiments. For example, FIG. 10 shows a flowchart 1000 of a process for evaluating a compaction action, in accordance with an example embodiment. In an embodiment, compaction evaluator 120 of FIG. 9 operates according to flowchart 1000. Note not all steps of flowchart 1000 need be performed in all embodiments. Further structural and operational embodiments will be apparent to persons skilled in the relevant art(s) based on the following description of FIG. 10.

Flowchart 1000 begins with step 1002. In step 1002, a result of a compaction action is received. For instance, result evaluator 906 of FIG. 9 receives a result 914 of a compaction action. Examples of results 914 include, but are not limited to, compute cost for a compaction task, time to perform the compaction action, a number of files reduced, a normalization of file size, a reduction in file size, an increase in file size, and/or the like.

In step 1004, the result is compared with an estimation utilized to rank the compaction action. For instance, result evaluator 906 of FIG. 9 compares result 914 with an estimation 916 utilized to rank the compaction action. In an embodiment, estimation 916 is an estimation of the compute cost determined by trait determiner 112 and result evaluator 906 compares a compute cost of compaction action 216 with result 914 to determine a comparison result 918.

In step 1006, the statistic for the first candidate is updated based at least on the comparison. For instance, updater 908 of FIG. 9 updates statistic information, trait information, and/or logic of statistic updater 902 based on comparison result 918. For instance, suppose trait determiner 112 utilized statistic updater 902 to determine the estimated compute cost. In this context, updater 908 updates statistic updater 902 with data 920 comprising result 914. Thus, overtime, the estimations generated by trait determiner 112 utilizing statistic updater 902 improve in accuracy. In another embodiment, statistic updater 902 is updated with data 920 in a manner that improves accuracy in statistic information 910 for candidates. In this context, accuracy of statistics determined by candidate observer 110 are improved, thus improving estimations of compute cost determined by trait determiner based at least on the statistics.

Thus, an example of compaction evaluator 120 causing a statistic or trait to be updated has been described with respect to FIG. 10. In an embodiment, compaction evaluator can flag data or candidates for further compaction. For instance, suppose a compaction action is performed with respect to a candidate file comprising multiple files (e.g., a 100 MB file and five 1 MB files) below a threshold amount (e.g., 500 MB). Further suppose, the compaction action results in a candidate file with one or more files still below the threshold amount (e.g., a 105 MB file below the 500 MB threshold). In this context, compaction evaluator 120 flags the candidate file as a potential candidate for further compaction. In this manner, file compactor 104 considers the candidate file in a subsequent compaction evaluation process. For instance, suppose normally file compactor 104 does not consider a file a candidate file if it was recently compacted within a predetermined number of hours, days, or weeks. However, by flagging the candidate file, compaction evaluator 120 indicates to file compactor 104 that the candidate file can still be further compacted. For instance, compaction evaluator 120 can indicate further impaction can be performed in an embodiment if new files are added to the candidate or similar files are added or modified.

VII. Further Example Embodiments

A. Example Data Flow Embodiments

As described elsewhere herein, embodiments of data compaction perform automatic compaction with respect to data stored in a data store. Data can be stored in a data store in various ways. For example, FIG. 11 shows a block diagram of data flow in a data management system 1100 ("system 1100" herein), in accordance with an example embodiment. As shown in FIG. 11, system 1100 comprises application 122, as described with respect to FIG. 1, as well as a data extractor 1102 and a data store 1108. Data store 1108 is a further example of server infrastructure 106, in an embodiment. In an embodiment, data store 1108 comprises a data lake. Alternatively, data store 1108 comprises a database.

In FIG. 11, application 122 generates raw data 1104. Raw data 1104 is provided to data store 1108 for storage thereby. For instance, in accordance with an embodiment, raw data 1104 is stored in data store 1108 as file 134.

Data extractor 1102 is a computer-implemented service or component for extracting data. In an embodiment, data extractor 1102 extracts, transforms, or loads data from one or more sources (e.g., applications, devices, and/or the like) into a data set for store in data store 1108 as extracted data 1106. For instance, in accordance with an embodiment, extracted data 1106 is stored in data store 1108 as file 136.

In an embodiment, raw data 1104 and extracted data 1106 are related. In this context, a query querying for information about a workload associated with either raw data 1104 or extracted data 1106 can, in some situations, scan both files. Suppose file 134 is a relatively small file. In this context, file compactor 104 automatically implements data compaction techniques described herein to perform a compaction action, resulting in a combined version of files 134 and 136.

B. Example Table API Embodiments

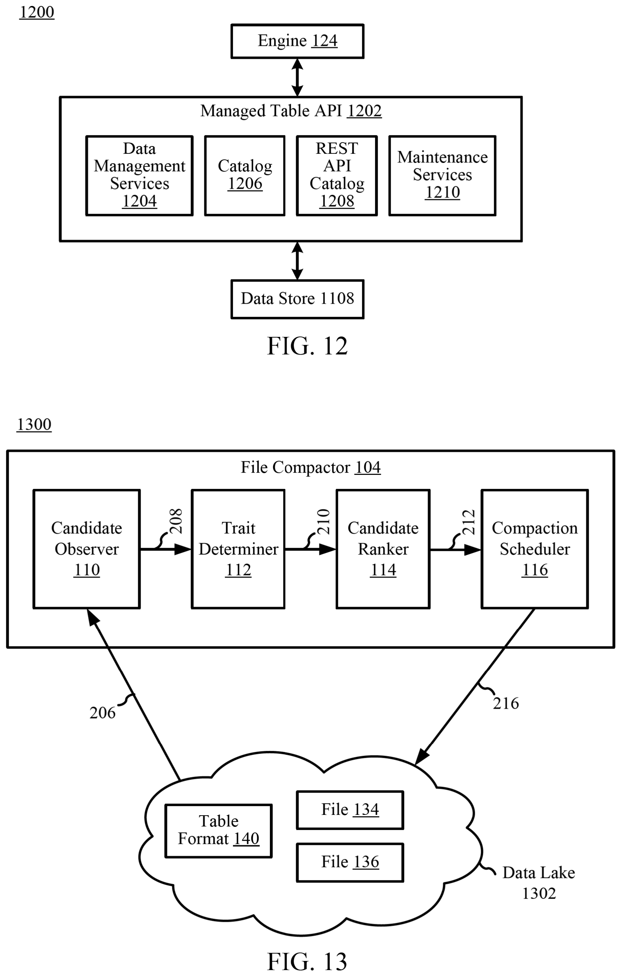

Engine 124 of FIG. 1 is configurable in various ways to query a data store. For instance, FIG. 12 shows a block diagram of a system 1200 comprising a managed table API 1202, in accordance with an example embodiment. As also shown in FIG. 12, system 1200 comprises engine 124 as described with respect to FIG. 1 and data store 1108 as described with respect to FIG. 11. In an embodiment, engine 124 accesses APIs of managed table API 1202 to query data store 1108 for data, perform operations with respect to data, receive responses, and/or the like.

Managed table API 1202 can include any number of various APIs or services for interfacing with data store 1108. For instance, as shown in FIG. 12, managed table API 1202 comprises a data management services 1204 (comprising APIs related thereto), a catalog 1206 (comprising APIs related thereto), a REST API catalog 1208 (comprising REST APIs related to catalog 1206), and a maintenance services 1210 (comprising APIs related thereto).

C. Example Data Lake Embodiments

As described herein, some implementations of file compactor 104 perform data compaction with respect to a data lake. For instance, FIG. 13 shows a block diagram of a data lake system 1300 ("system 1300" herein), in accordance with an example embodiment. As shown in FIG. 13, system 1300 comprises file compactor 104 (comprising candidate observer 110, trait determiner 112, candidate ranker 114, and compaction scheduler 116) as described with respect to FIG. 1, as well as a data lake 1302. Data lake 1302 is a further example of data store 1108 of FIG. 11.

Data lake 1302 stores structured and/or unstructured data. Data can be stored in data lake 1302 in its native format. As shown in FIG. 13, data lake 1302 stores files 134 and 136, as described with respect to FIG. 1, as well as a table format 140. In an embodiment, table format 140 is a table format comprising metadata associated with files 134 and 136.

As shown in FIG. 13, candidate observer 110 obtains files 206 from data lake 1302, in a similar manner as described with respect to FIGS. 2 and 3. In an embodiment, files 206 comprise table format 140, file 134, and file 136. File compactor 104 operates in a similar manner as described with respect to FIGS. 2 and 3, as well as elsewhere herein. As also shown in FIG. 13, compaction scheduler 116 performs (or causes performance of) compaction action 216 with respect to data lake 1302 (or a file or table format thereof).

D. Pareto Frontier Embodiments

Some embodiments described herein utilize a multi-objective optimization task approach to rank file compaction actions and candidates. In an alternative embodiment, a Pareto frontier approach is utilized to generate a set of Pareto-optimal solutions. Each Pareto-optimal solution represents a balance between traits/objectives, such as file count reduction and compute cost. In an aspect, the solutions on the Pareto frontier are non-dominated, e.g., improving an objective could worsen another. This approach could improve candidate ranker 114 and/or compaction scheduler 116's ability to evaluate the results and determine which compaction actions to prioritize based on operational needs/criteria.

E. Conflict Resolution Embodiments

In some embodiments, compaction scheduler 116 operates in a manner to reduce a likelihood of a conflict below a threshold. In an embodiment, compaction scheduler 116 evaluates a conflict resolution protocol for a table format the candidate utilizes and, based on the evaluation, schedules one or more compaction actions. For instance, suppose compaction scheduler 116 evaluates the conflict resolution protocol and determines a conflict resolution operation to resolve a conflict that is likely to happen between two compaction actions. In this context, compaction scheduler 116 can schedule the compaction actions and set rules to resolve the conflict according to the conflict resolution operation if a conflict is triggered. Depending on the implementation, compaction scheduler 116 handles the conflict resolution, another component of file compactor 104 handles the conflict resolution, engine 124 is caused to handle the conflict resolution, and/or the like.

F. Automatic Data Layout Embodiments

Embodiments described herein implement data compaction techniques to manage small files, file fragmentation, and/or the like. In some embodiments, file compactor 104 operates in a manner to improve data layout strategies. For instance, in an embodiment, file compactor 104 utilizes techniques described herein to determine a data clustering technique to implement to improve compression ratios, encoding efficiency, and/or query performance by co-locating related data using Z-ordering clustering, V-ordering clustering, and/or the like. For instance, candidate observer 110 would consider a scope of the data layout and a layout optimization technique. In an aspect, trait determiner 112 is configured to generate traits that account for data layout optimization, such as compression improvement trait, a filtering efficiency trait, overhead cost for data sampling or data passing, and/or the like. In an embodiment, file compactor 104 performs a data layout reorganization operation to cluster or map files to one another in a new table, in a combined group, and/or the like. In an embodiment, file compactor 104 operates as a data layout determiner to determine a sorting schema to organize data in (e.g., bin packing, sorting, and/or the like).

G. Workload Awareness Embodiments

In some embodiments, trait determiner 112 incorporates workload awareness into trait determination. In this context, the decision-making process for layout optimization or data compaction can be further refined. For instance, layout optimizations can be aligned with query patterns and access frequency of workloads. In an embodiment, trait determiner 112 utilizes anonymized workloads for workload awareness. In an aspect, partitioning and clustering strategies selected with a query pattern in mind can influence efficiencies of writes and compactions by reducing unnecessary data conflict errors.

H. Write and Compaction Mechanism and Policy Tuning Embodiments

In some embodiments, an engine or table format can expose a wide range of configuration parameters that influence data layout on write. For instance, in one implementation, an engine utilizes an adaptive query execution framework. This framework could inadvertently choose an small shuffle partition size for final writes or a suboptimal distribute mode for table setup, resulting in an excessive number of small files. Furthermore, a developer user could have difficulty controlling engine configurations across workloads (e.g., due to indirect control).
Some embodiments of file compactor 104 analyze and identify these type of issues or errors. In an embodiment, file compactor 104 causes a prompt in a user interface to be presented, the prompt recommending a remedy to the identified issue. Alternatively, file compactor 104 automatically implements a remedial action with respect to the issue. In an embodiment, file compactor 104 identifies a compaction trigger or layout strategy that is incompatible or has a likelihood of causing an error or degradation in performance with respect to a candidate file. In this context, file compactor 104 raises the issue for manual inspection and presents the option in a user interface.

I. Database Defragmentation Embodiments

Several embodiments have been described herein with respect to data lakes and de fragmenting files in a data lake. However, embodiments described herein are not so limited. For instance, in accordance with an embodiment, file compactor 104 operates in a similar manner as described herein to compact files stored in a database. In an embodiment, a database defragmenter operates in a similar manner as described with respect to file compactor 104 to defragment files in a database. For instance, in an embodiment, a database defragmenter determines candidate files, tables, or data to perform a defragmentation operation, determines traits of the candidates, ranks defragmentation operations based on the traits, and schedules the defragmentation operations. Defragmentation operations include, but are not limited to, a database vacuuming operation, a garbage collection operation, and/or another operation to defragment a database.

J. Embodiments of Models and/or Rules for Determining Statistics

As described herein, in an embodiment, trait determiner 112 utilizes statistic updater 902 to determine and/or estimate at least some trait values. In an embodiment, statistic updater comprises a model and/or rule. In an embodiment, the model and/or rule is determined utilizing existing or synthetic data. In an embodiment, the existing or synthetic data comprises parameters such as, but not limited to, raw data size, number of databases, computation workload time, execution time, and/or the like. Synthetic data is generated from the parameters, in an embodiment. In an embodiment, the model and/or rule is configured and/or adjusted based on one or more candidate selection strategies: (1) no compaction, (2) table-scope compaction, (3) a hybrid compaction strategy, and/or any other type of candidate selection strategy (e.g., partition scoped compaction). In an embodiment, a hybrid compaction strategy scopes compaction dependent on whether or not a table is partitioned or grouped. In an embodiment, hybrid compaction can improve balance in resource utilization load. In an embodiment, candidates can be compacted sequentially and/or in parallel. For instance, in an embodiment, table-scope compaction is performed in parallel across different tables whereas partition-scope compaction is performed sequentially to reduce a likelihood of a conflict.
In an embodiment, a trainer of the model and/or rule measures and/or obtains metrics for file counts of tables, rewritten bytes, added files, compute resources utilized, time taken, and/or other metrics. In an embodiment, a triggered compaction operation is treated as a distinct application instance. In an embodiment, the model and/or rule is trained to perform compaction that results in a predetermined range or value of file counts and/or file sizes. In an embodiment, the model and/or rule is trained to reduce compaction cost or maintain compaction cost within a predetermined window or range. In an embodiment, the model and/or rule is trained to reduce write-to-write conflicts.
In embodiments, the model and/or rule is utilized to automatically tune compaction triggers. For instance, a compaction trigger for one workload can have improved performance whereas for another workload it could degrade performance or otherwise result in performance lower than if another compaction trigger were used. In this aspect, the trainer for the model trains the model to determine a compaction trigger to monitor or utilize based on a type of a candidate, a system the candidate is associated with, other characteristics/statistics of the candidate, and/or the like. In an embodiment, dynamic triggering is used to trigger compaction based on values of one or more traits or a combination of values of two or more traits.

I. Adaptable Decision Function Embodiments

Candidate ranker 114 operates in various ways described herein operates in various ways to rank candidates and compaction actions. In some embodiments, candidate ranker 114 utilizes different decision functions for ranking based on a workload type of a workload that accesses a candidate file, a candidate type, a table format type, and/or other statistics. In an embodiment, candidate ranker 114 adjusts a decision function or weights thereof based on system performance and/or telemetry. For instance, in an embodiment, candidate ranker 114 considers an access frequency of a candidate by workloads/queries in order to determine a rank of a compaction action with respect to the candidate. Furthermore, in an aspect, a compaction action is determined based on the accessing workloads/queries, e.g., to optimize a table or file for that workload.

VIII. Example Computer System Implementation

Systems, devices, components, and/or techniques described herein are implemented in hardware, or hardware combined with one or both of software and/or firmware. For example, file compactor 104, compaction evaluator 120, application 122, application 130, engine 124, statistic updater 902, result evaluator 906, updater 908, data extractor 1102, managed table API 1202, and/or each of the components described therein, and/or the steps of flowcharts 300, 400, 500, 600, 700, 800, and/or 1000 are each implemented as computer program code/instructions configured to be executed in one or more processors and stored in a computer readable storage medium. Alternatively, file compactor 104, compaction evaluator 120, engine 124, statistic updater 902, result evaluator 906, updater 908, data extractor 1102, managed table API 1202, and/or each of the components described therein, and/or the steps of flowcharts 300, 400, 500, 600, 700, 800, and/or 1000 are each implemented in one or more SoCs (system on chip). An SoC includes an integrated circuit chip that includes one or more of a processor (e.g., a central processing unit (CPU), microcontroller, microprocessor, digital signal processor (DSP), etc.), memory, one or more communication interfaces, and/or further circuits, and optionally executes received program code and/or include embedded firmware to perform functions.

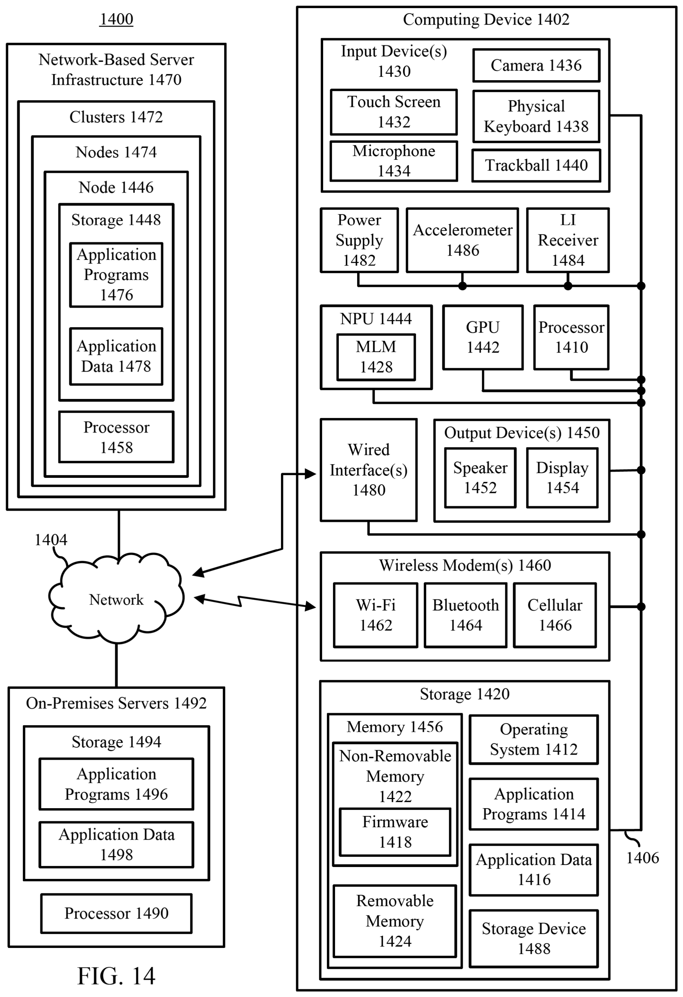

Embodiments disclosed herein can be implemented in one or more computing devices that are mobile (a mobile device) and/or stationary (a stationary device) and include any combination of the features of such mobile and stationary computing devices. Examples of computing devices in which embodiments are implementable are described as follows with respect to FIG. 14. FIG. 14 shows a block diagram of an exemplary computing environment 1400 that includes a computing device 1402. Computing device 1402 is an example of computing device 102, file compactor 104, server infrastructure 106, engine server 108, and/or evaluation server 118, which each include one or more of the components of computing device 1402. In some embodiments, computing device 1402 is communicatively coupled with devices (not shown in FIG. 14) external to computing environment 1400 via network 1404. In accordance with an embodiment, network 1404 is an example of network 138 of FIG. 1. Network 1404 comprises one or more networks such as local area networks (LANs), wide area networks (WANs), enterprise networks, the Internet, etc. In examples, network 1404 includes one or more wired and/or wireless portions. In some examples, network 1404 additionally or alternatively includes a cellular network for cellular communications. Computing device 1402 is described in detail as follows.

Computing device 1402 can be any of a variety of types of computing devices. Examples of computing device 1402 include a mobile computing device such as a handheld computer (e.g., a personal digital assistant (PDA)), a laptop computer, a tablet computer, a hybrid device, a notebook computer, a netbook, a mobile phone (e.g., a cell phone, a smart phone, etc.), a wearable computing device (e.g., a head-mounted augmented reality and/or virtual reality device including smart glasses), or other type of mobile computing device. In an alternative example, computing device 1402 is a stationary computing device such as a desktop computer, a personal computer (PC), a stationary server device, a minicomputer, a mainframe, a supercomputer, etc.

As shown in FIG. 14, computing device 1402 includes a variety of hardware and software components, including a processor 1410, a storage 1420, a graphics processing unit (GPU) 1442, a neural processing unit (NPU) 1444, one or more input devices 1430, one or more output devices 1450, one or more wireless modems 1460, one or more wired interfaces 1480, a power supply 1482, a location information (LI) receiver 1484, and an accelerometer 1486. Storage 1420 includes memory 1456, which includes non-removable memory 1422 and removable memory 1424, and a storage device 1488. Storage 1420 also stores an operating system 1412, application programs 1414, and application data 1416. Wireless modem(s) 1460 include a Wi-Fi modem 1462, a Bluetooth modem 1464, and a cellular modem 1466. Output device(s) 1450 includes a speaker 1452 and a display 1454. Input device(s) 1430 includes a touch screen 1432, a microphone 1434, a camera 1436, a physical keyboard 1438, and a trackball 1440. Not all components of computing device 1402 shown in FIG. 14 are present in all embodiments, additional components not shown may be present, and in a particular embodiment any combination of the components are present. In examples, components of computing device 1402 are mounted to a circuit card (e.g., a motherboard) of computing device 1402, integrated in a housing of computing device 1402, or otherwise included in computing device 1402. The components of computing device 1402 are described as follows.

In embodiments, a single processor 1410 (e.g., central processing unit (CPU), microcontroller, a microprocessor, signal processor, ASIC (application specific integrated circuit), and/or other physical hardware processor circuit) or multiple processors 1410 are present in computing device 1402 for performing such tasks as program execution, signal coding, data processing, input/output processing, power control, and/or other functions. In examples, processor 1410 is a single-core or multi-core processor, and each processor core is single-threaded or multithreaded (to provide multiple threads of execution concurrently). Processor 1410 is configured to execute program code stored in a computer readable medium, such as program code of operating system 1412 and application programs 1414 stored in storage 1420. The program code is structured to cause processor 1410 to perform operations, including the processes/methods disclosed herein. Operating system 1412 controls the allocation and usage of the components of computing device 1402 and provides support for one or more application programs 1414 (also referred to as "applications" or "apps"). In examples, application programs 1414 include common computing applications (e.g., e-mail applications, calendars, contact managers, web browsers, messaging applications), further computing applications (e.g., word processing applications, mapping applications, media player applications, productivity suite applications), one or more machine learning (ML) models, as well as applications related to the embodiments disclosed elsewhere herein. In examples, processor(s) 1410 includes one or more general processors (e.g., CPUs) configured with or coupled to one or more hardware accelerators, such as one or more NPUs 1444 and/or one or more GPUs 1442.

Any component in computing device 1402 can communicate with any other component according to function, although not all connections are shown for ease of illustration. For instance, as shown in FIG. 14, bus 1006 is a multiple signal line communication medium (e.g., conductive traces in silicon, metal traces along a motherboard, wires, etc.) present to communicatively couple processor 1410 to various other components of computing device 1402, although in other embodiments, an alternative bus, further buses, and/or one or more individual signal lines is/are present to communicatively couple components. Bus 1006 represents one or more of any of several types of bus structures, including a memory bus or memory controller, a peripheral bus, an accelerated graphics port, and a processor or local bus using any of a variety of bus architectures.

Storage 1420 is physical storage that includes one or both of memory 1456 and storage device 1488, which store operating system 1412, application programs 1414, and application data 1416 according to any distribution. Non-removable memory 1422 includes one or more of RAM (random access memory), ROM (read only memory), flash memory, a solid-state drive (SSD), a hard disk drive (e.g., a disk drive for reading from and writing to a hard disk), and/or other physical memory device type. In examples, non-removable memory 1422 includes main memory and is separate from or fabricated in a same integrated circuit as processor 1410. As shown in FIG. 14, non-removable memory 1422 stores firmware 1418 that is present to provide low-level control of hardware. Examples of firmware 1418 include BIOS (Basic Input/Output System, such as on personal computers) and boot firmware (e.g., on smart phones). In examples, removable memory 1424 is inserted into a receptacle of or is otherwise coupled to computing device 1402 and can be removed by a user from computing device 1402. Removable memory 1424 can include any suitable removable memory device type, including an SD (Secure Digital) card, a Subscriber Identity Module (SIM) card, which is well known in GSM (Global System for Mobile Communications) communication systems, and/or other removable physical memory device type. In examples, one or more of storage device 1488 are present that are internal and/or external to a housing of computing device 1402 and are or are not removable. Examples of storage device 1488 include a hard disk drive, an SSD, a thumb drive (e.g., a USB (Universal Serial Bus) flash drive), or other physical storage device.

One or more programs are stored in storage 1420. Such programs include operating system 1412, one or more application programs 1414, and other program modules and program data. Examples of such application programs include computer program logic (e.g., computer program code/instructions) for implementing file compactor 104, compaction evaluator 120, application 122, application 130, engine 124, statistic updater 902, result evaluator 906, updater 908, data extractor 1102, managed table API 1202, and/or each of the components described therein, and/or the steps of flowcharts 300, 400, 500, 600, 700, 800, and/or 1000, and/or any individual steps thereof.

Storage 1420 also stores data used and/or generated by operating system 1412 and application programs 1414 as application data 1416. Examples of application data 1416 include web pages, text, images, tables, sound files, video data, and other data. In examples, application data 1416 is sent to and/or received from one or more network servers or other devices via one or more wired or wireless networks. Storage 1420 can be used to store further data including a subscriber identifier, such as an International Mobile Subscriber Identity (IMSI), and an equipment identifier, such as an International Mobile Equipment Identifier (IMEI). Such identifiers can be transmitted to a network server to identify users and equipment.

In examples, a user enters commands and information into computing device 1402 through one or more input devices 1430 and receives information from computing device 1402 through one or more output devices 1450. Input device(s) 1430 includes one or more of touch screen 1432, microphone 1434, camera 1436, physical keyboard 1438 and/or trackball 1440 and output device(s) 1450 includes one or more of speaker 1452 and display 1454. Each of input device(s) 1430 and output device(s) 1450 are integral to computing device 1402 (e.g., built into a housing of computing device 1402) or are external to computing device 1402 (e.g., communicatively coupled wired or wirelessly to computing device 1402 via wired interface(s) 1480 and/or wireless modem(s) 1460). Further input devices 1430 (not shown) can include a Natural User Interface (NUI), a pointing device (computer mouse), a joystick, a video game controller, a scanner, a touch pad, a stylus pen, a voice recognition system to receive voice input, a gesture recognition system to receive gesture input, or the like. Other possible output devices (not shown) can include piezoelectric or other haptic output devices. Some devices can serve more than one input/output function. For instance, display 1454 displays information, as well as operating as touch screen 1432 by receiving user commands and/or other information (e.g., by touch, finger gestures, virtual keyboard, etc.) as a user interface. Any number of each type of input device(s) 1430 and output device(s) 1450 are present, including multiple microphones 1434, multiple cameras 1436, multiple speakers 1452, and/or multiple displays 1454.

In embodiments where GPU 1442 is present, GPU 1442 includes hardware (e.g., one or more integrated circuit chips that implement one or more of processing cores, multiprocessors, compute units, etc.) configured to accelerate computer graphics (two-dimensional (2D) and/or three-dimensional (3D)), perform image processing, and/or execute further parallel processing applications (e.g., training of neural networks, etc.). Examples of GPU 1442 perform calculations related to 3D computer graphics, include 2D acceleration and framebuffer capabilities, accelerate memory-intensive work of texture mapping and rendering polygons, accelerate geometric calculations such as the rotation and translation of vertices into different coordinate systems, support programmable shaders that manipulate vertices and textures, perform oversampling and interpolation techniques to reduce aliasing, and/or support very high-precision color spaces.

In examples, NPU 1444 (also referred to as an "artificial intelligence (AI) accelerator" or "deep learning processor (DLP)") is a processor or processing unit configured to accelerate artificial intelligence and machine learning applications, such as execution of machine learning (ML) model (MLM) 1428. In an example, NPU 1444 is configured for a data-driven parallel computing and is highly efficient at processing massive multimedia data such as videos and images and processing data for neural networks. NPU 1444 is configured for efficient handling of AI-related tasks, such as speech recognition, background blurring in video calls, photo or video editing processes like object detection, etc.

In embodiments disclosed herein that implement ML models, NPU 1444 can be utilized to execute such ML models, of which MLM 1428 is an example. For instance, where applicable, MLM 1428 is a generative AI model that generates content that is complex, coherent, and/or original. For instance, a generative AI model can create sophisticated sentences, lists, ranges, tables of data, images, essays, and/or the like. An example of a generative AI model is a language model. A language model is a model that estimates the probability of a token or sequence of tokens occurring in a longer sequence of tokens. In this context, a "token" is an atomic unit that the model is training on and making predictions on. Examples of a token include, but are not limited to, a word, a character (e.g., an alphanumeric character, a blank space, a symbol, etc.), a sub-word (e.g., a root word, a prefix, or a suffix). In other types of models (e.g., image based models) a token may represent another kind of atomic unit (e.g., a subset of an image). Examples of language models applicable to embodiments herein include large language models (LLMs), text-to-image AI image generation systems, text-to-video AI generation systems, etc. A large language model (LLM) is a language model that has a high number of model parameters. In examples, an LLM has millions, billions, trillions, or even greater numbers of model parameters. Model parameters of an LLM are the weights and biases the model learns during training. Some implementations of LLMs are transformer-based LLMs (e.g., the family of generative pre-trained transformer (GPT) models). A transformer is a neural network architecture that relies on self-attention mechanisms to transform a sequence of input embeddings into a sequence of output embeddings (e.g., without relying on convolutions or recurrent neural networks).

In further examples, NPU 1444 is used to train MLM 1428. To train MLM 1428, training data is that includes input features (attributes) and their corresponding output labels/target values (e.g., for supervised learning) is collected. A training algorithm is a computational procedure that is used so that MLM 1428 learns from the training data. Parameters/-weights are internal settings of MLM 1428 that are adjusted during training by the training algorithm to reduce a difference between predictions by MLM 1428 and actual outcomes (e.g., output labels). In some examples, MLM 1428 is set with initial values for the parameters/weights. A loss function measures a dissimilarity between predictions by MLM 1428 and the target values, and the parameters/weights of MLM 1428 are adjusted to minimize the loss function. The parameters/-weights are iteratively adjusted by an optimization technique, such as gradient descent. In this manner, MLM 1428 is generated through training by NPU 1444 to be used to generate inferences based on received input feature sets for particular applications. MLM 1428 is generated as a computer program or other type of algorithm configured to generate an output (e.g., a classification, a prediction/inference) based on received input features, and is stored in the form of a file or other data structure.

In examples, such training of MLM 1428 by NPU 1444 is supervised or unsupervised. According to supervised learning, input objects (e.g., a vector of predictor variables) and a desired output value (e.g., a human-labeled supervisory signal) train MLM 1428. The training data is processed, building a function that maps new data on expected output values.

Example algorithms usable by NPU 1444 to perform supervised training of MLM 1428 in particular implementations include support-vector machines, linear regression, logistic regression, Naïve Bayes, linear discriminant analysis, decision trees, K-nearest neighbor algorithm, neural networks, and similarity learning.

In an example of supervised learning where MLM 1428 is an LLM, MLM 1428 can be trained by exposing the LLM to (e.g., large amounts of) text (e.g., predetermined datasets, books, articles, text-based conversations, webpages, transcriptions, forum entries, and/or any other form of text and/or combinations thereof). In examples, training data is provided from a database, from the Internet, from a system, and/or the like. Furthermore, an LLM can be fine-tuned using Reinforcement Learning with Human Feedback (RLHF), where the LLM is provided the same input twice and provides two different outputs and a user ranks which output is preferred. In this context, the user's ranking is utilized to improve the model. Further still, in example embodiments, an LLM is trained to perform in various styles, e.g., as a completion model (a model that is provided a few words or tokens and generates words or tokens to follow the input), as a conversation model (a model that provides an answer or other type of response to a conversation-style prompt), as a combination of a completion and conversation model, or as another type of LLM model.

According to unsupervised learning, MLM 1428 is trained to learn patterns from unlabeled data. For instance, in embodiments where MLM 1428 implements unsupervised learning techniques, MLM 1428 identifies one or more classifications or clusters to which an input belongs. During a training phase of MLM 1428 according to unsupervised learning, MLM 1428 tries to mimic the provided training data and uses the error in its mimicked output to correct itself (i.e., correct weights and biases). In further examples, NPU 1444 perform unsupervised training of MLM 1428 according to one or more alternative techniques, such as Hopfield learning rule, Boltzmann learning rule, Contrastive Divergence, Wake Sleep, Variational Inference, Maximum Likelihood, Maximum A Posteriori, Gibbs Sampling, and backpropagating reconstruction errors or hidden state reparameterizations.

Note that NPU 1444 need not necessarily be present in all ML model embodiments. In embodiments where ML models are present, any one or more of processor 1410, GPU 1442, and/or NPU 1444 can be present to train and/or execute MLM 1428.

One or more wireless modems 1460 can be coupled to antenna(s) (not shown) of computing device 1402 and can support two-way communications between processor 1410 and devices external to computing device 1402 through network 1404, as would be understood to persons skilled in the relevant art(s). Wireless modem 1460 is shown generically and can include a cellular modem 1466 for communicating with one or more cellular networks, such as a GSM network for data and voice communications within a single cellular network, between cellular networks, or between the mobile device and a public switched telephone network (PSTN). In examples, wireless modem 1460 also or alternatively includes other radio-based modem types, such as a Bluetooth modem 1464 (also referred to as a "Bluetooth device") and/or Wi-Fi modem 1462 (also referred to as an "wireless adaptor"). Wi-Fi modem 1462 is configured to communicate with an access point or other remote Wi-Fi-capable device according to one or more of the wireless network protocols based on the IEEE (Institute of Electrical and Electronics Engineers) 802.11 family of standards, commonly used for local area networking of devices and Internet access. Bluetooth modem 1464 is configured to communicate with another Bluetooth-capable device according to the Bluetooth short-range wireless technology standard(s) such as IEEE 802.15.1 and/or managed by the Bluetooth Special Interest Group (SIG).

Computing device 1402 can further include power supply 1482, LI receiver 1484, accelerometer 1486, and/or one or more wired interfaces 1480. Example wired interfaces 1480 include a USB port, IEEE 1394 (FireWire) port, a RS-142 port, an HDMI (High-Definition Multimedia Interface) port (e.g., for connection to an external display), a DisplayPort port (e.g., for connection to an external display), an audio port, and/or an Ethernet port, the purposes and functions of each of which are well known to persons skilled in the relevant art(s). Wired interface(s) 1480 of computing device 1402 provide for wired connections between computing device 1402 and network 1404, or between computing device 1402 and one or more devices/peripherals when such devices/peripherals are external to computing device 1402 (e.g., a pointing device, display 1454, speaker 1452, camera 1436, physical keyboard 1438, etc.). Power supply 1482 is configured to supply power to each of the components of computing device 1402 and receives power from a battery internal to computing device 1402, and/or from a power cord plugged into a power port of computing device 1402 (e.g., a USB port, an A/C power port). LI receiver 1484 is useable for location determination of computing device 1402 and in examples includes a satellite navigation receiver such as a Global Positioning System (GPS) receiver and/or includes other type of location determiner configured to determine location of computing device 1402 based on received information (e.g., using cell tower triangulation, etc.). Accelerometer 1486, when present, is configured to determine an orientation of computing device 1402.

Note that the illustrated components of computing device 1402 are not required or all-inclusive, and fewer or greater numbers of components can be present as would be recognized by one skilled in the art. In examples, computing device 1402 includes one or more of a gyroscope, barometer, proximity sensor, ambient light sensor, digital compass, etc. In an example, processor 1410 and memory 1456 are co-located in a same semiconductor device package, such as being included together in an integrated circuit chip, FPGA, or system-on-chip (SOC), optionally along with further components of computing device 1402.

**EP 4 752 744 A1**

In embodiments, computing device 1402 is configured to implement any of the above-described features of flowcharts herein. Computer program logic for performing any of the operations, steps, and/or functions described herein is stored in storage 1420 and executed by processor 1410.

In some embodiments, server infrastructure 1470 is present in computing environment 1400 and is communicatively coupled with computing device 1402 via network 1404. Server infrastructure 1470, when present, is a network-accessible server set (e.g., a cloud-based environment or platform). As shown in FIG. 14, server infrastructure 1470 includes clusters 1472. Each of clusters 1472 comprises a group of one or more compute nodes and/or a group of one or more storage nodes. For example, as shown in FIG. 14, cluster 1472 includes nodes 1474. Each of nodes 1474 are accessible via network 1404 (e.g., in a "cloud-based" embodiment) to build, deploy, and manage applications and services. In examples, any of nodes 1474 is a storage node that comprises a plurality of physical storage disks, SSDs, and/or other physical storage devices that are accessible via network 1404 and are configured to store data associated with the applications and services managed by nodes 1474.

Each of nodes 1474, as a compute node, comprises one or more server computers, server systems, and/or computing devices. For instance, a node 1474 in accordance with an embodiment includes one or more of the components of computing device 1402 disclosed herein. Each of nodes 1474 is configured to execute one or more software applications (or "applications") and/or services and/or manage hardware resources (e.g., processors, memory, etc.), which are utilized by users (e.g., customers) of the network-accessible server set. In examples, as shown in FIG. 14, nodes 1474 includes a node 1446 that includes storage 1448 and/or one or more of a processor 1458 (e.g., similar to processor 1410, GPU 1442, and/or NPU 1444 of computing device 1402). Storage 1448 stores application programs 1476 and application data 1478. Processor(s) 1458 operate application programs 1476 which access and/or generate related application data 1478. In an implementation, nodes such as node 1446 of nodes 1474 operate or comprise one or more virtual machines, with each virtual machine emulating a system architecture (e.g., an operating system), in an isolated manner, upon which applications such as application programs 1476 are executed.

In embodiments, one or more of clusters 1472 are located/co-located (e.g., housed in one or more nearby buildings with associated components such as backup power supplies, redundant data communications, environmental controls, etc.) to form a datacenter, or are arranged in other manners. Accordingly, in an embodiment, one or more of clusters 1472 are included in a datacenter in a distributed collection of datacenters. In embodiments, exemplary computing environment 1400 comprises part of a cloud-based platform.

In an embodiment, computing device 1402 accesses application programs 1476 for execution in any manner, such as by a client application and/or a browser at computing device 1402.

In an example, for purposes of network (e.g., cloud) backup and data security, computing device 1402 additionally and/or alternatively synchronizes copies of application programs 1414 and/or application data 1416 to be stored at network-based server infrastructure 1470 as application programs 1476 and/or application data 1478. In examples, operating system 1412 and/or application programs 1414 include a file hosting service client configured to synchronize applications and/or data stored in storage 1420 at network-based server infrastructure 1470.

In some embodiments, on-premises servers 1492 are present in computing environment 1400 and are communicatively coupled with computing device 1402 via network 1404. On-premises servers 1492, when present, are hosted within an organization's infrastructure and, in many cases, physically onsite of a facility of that organization. On-premises servers 1492 are controlled, administered, and maintained by IT (Information Technology) personnel of the organization or an IT partner to the organization. Application data 1498 can be shared by on-premises servers 1492 between computing devices of the organization, including computing device 1402 (when part of an organization) through a local network of the organization, and/or through further networks accessible to the organization (including the Internet). Furthermore, in examples, on-premises servers 1492 serve applications such as application programs 1496 to the computing devices of the organization, including computing device 1402. Accordingly, in examples, on-premises servers 1492 include storage 1494 (which includes one or more physical storage devices such as storage disks and/or SSDs) for storage of application programs 1496 and application data 1498 and include a processor 1490 (e.g., similar to processor 1410, GPU 1442, and/or NPU 1444 of computing device 1402) for execution of application programs 1496. In some embodiments, multiple processors 1490 are present for execution of application programs 1496 and/or for other purposes. In further examples, computing device 1402 is configured to synchronize copies of application programs 1414 and/or application data 1416 for backup storage at on-premises servers 1492 as application programs 1496 and/or application data 1498.

Embodiments described herein may be implemented in one or more of computing device 1402, network-based server infrastructure 1470, and on-premises servers 1492. For example, in some embodiments, computing device 1402 is used to implement systems, clients, or devices, or components/subcomponents thereof, disclosed elsewhere herein. In other embodiments, a combination of computing device 1402, network-based server infrastructure 1470, and/or on-premises servers 1492 is used to implement the systems, clients, or devices, or components/subcomponents thereof, disclosed elsewhere herein.

As used herein, the terms "computer program medium," "computer-readable medium," "computer-readable storage medium," and "computer-readable storage device," etc., are used to refer to physical hardware media. Examples of such physical hardware media include any hard disk, optical disk, SSD, other physical hardware media such as RAMs, ROMs, flash memory, digital video disks, zip disks, MEMs (microelectronic machine) memory, nanotechnology-based storage devices, and further types of physical/tangible hardware storage media of storage 1420. Such computer-readable media and/or storage media are distinguished from and non-overlapping with communication media, propagating signals, and signals per se. Stated differently, "computer program medium," "computer-readable medium," "computer-readable storage medium," and "computer-readable storage device" do not encompass communication media, propagating signals, and signals per se. Communication media embodies computer-readable instructions, data structures, program modules or other data in a modulated data signal such as a carrier wave. The term "modulated data signal" means a signal that has one or more of its characteristics set or changed in such a manner as to encode information in the signal. By way of example, and not limitation, communication media includes wireless media such as acoustic, RF, infrared, and other wireless media, as well as wired media. Embodiments are also directed to such communication media that are separate and non-overlapping with embodiments directed to computer-readable storage media.

As noted above, computer programs and modules (including application programs 1414) are stored in storage 1420. Such computer programs can also be received via wired interface(s) 1460 and/or wireless modem(s) 1460 over network 1404. Such computer programs, when executed or loaded by an application, enable computing device 1402 to implement features of embodiments discussed herein. Accordingly, such computer programs represent controllers of the computing device 1402.

Embodiments are also directed to computer program products comprising computer code or instructions stored on any computer-readable medium or computer-readable storage medium. Such computer program products include the physical storage of storage 1420 as well as further physical storage types.

IX. Additional Exemplary Embodiments

A method is described herein. The method comprises: determining a statistic for a plurality of candidates, candidates of the plurality of candidates comprising a respective set of files managed by a table format; ranking, based on the statistic, the plurality of candidates with respect to a compaction objective specifying a target outcome of compacting at least one of the plurality of candidates; selecting a first candidate of the plurality of candidates based at least on its ranking; determining a first compaction action based at least on the compaction objective, the table format, and the first candidate; and causing performance of the first compaction action with respect to the first candidate.

In a further example of the foregoing method, said ranking of the plurality of candidates with respect to the compaction object comprises: determining a trait based on the statistic, the trait describing a state of a respective candidate of the plurality of candidates; and ranking the plurality of candidates based on their respective states.

In a further example of the foregoing method, the plurality of candidates comprises a second candidate; said ranking the plurality of candidates comprises: ranking, based on the trait and a first set of files of the first candidate, the first candidate with respect to the compaction objective, resulting in a first rank, and ranking, based on the trait and a second set of files of the second candidate, the second candidate with respect to the compaction objective, resulting in a second rank; and said selecting the first candidate comprises: selecting the first candidate based at least on the first rank being higher than the second rank.

In a further example of the foregoing method, said causing performance of the first compaction action with respect to the first candidate comprises: prioritizing, based at least on a computation budget available within a data store that stores the plurality of candidates, performance of the first compaction action over performance of a second compaction action associated with a second candidate of the plurality of candidates.

In a further example of the foregoing method, selecting the first candidate comprises: determining a second rank of the second candidate is higher than a first rank of the first candidate; determining a computation cost of the second candidate exceeds the computation budget of the data store; determining a computation cost of the first candidate is within the computation budget of the data store; and select the first candidate based at least on the computation cost of the first candidate being within the computation budget.

In a further example of the foregoing method, the method further comprises: responsive to determining a second candidate of the plurality of candidates comprises one or more temporary files, removing the second candidate from the plurality of candidates.

In a further example of the foregoing method, the method further comprises: detecting a triggering event; and determining the statistic for the plurality of candidates responsive to said detecting the triggering event.

In a further example of the foregoing method, the triggering event comprises a percentage of fragmentation of the plurality of candidates satisfying a fragmentation criterion.

In a further example of the foregoing method, the method further comprises: receiving a result of a compaction action; comparing the result of the compaction action with an estimated result utilized to rank the compaction action, resulting in a comparison result; and updating the statistic for the first candidate based at least on the comparison result.

In a further example of the foregoing method, the plurality of candidates are stored in a data lake managed by the table format.

A file compactor comprising a processor and memory is described herein. The memory storing program code structured to cause the processor to perform any of the foregoing methods.

A system comprising a processor and memory is described herein. The memory storing program code structured to cause the processor to perform any of the foregoing methods.

A computer-readable storage medium encoded with program instructions that, when executed by a processor circuit, perform any of the foregoing methods described herein.

X. Conclusion

References in the specification to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

In the discussion, unless otherwise stated, adjectives modifying a condition or relationship characteristic of a feature or features of an implementation of the disclosure, should be understood to mean that the condition or characteristic is defined to within tolerances that are acceptable for operation of the implementation for an application for which it is intended. Furthermore, if the performance of an operation is described herein as being "in response to" one or more factors, it is to be understood that the one or more factors may be regarded as a sole contributing factor for causing the operation to occur or a contributing factor along with one or more additional factors for causing the operation to occur, and that the operation may occur at any time upon or after establishment of the one or more factors. Still further, where "based on" is used to indicate an effect being a result of an indicated cause, it is to be understood that the effect is not required to only result from the indicated cause, but that any number of possible additional causes may also contribute to the effect. Thus, as used herein, the term "based on" should be understood to be equivalent to the term "based at least on."

Numerous example embodiments have been described above. Any section/subsection headings provided herein are not intended to be limiting. Embodiments are described throughout this document, and any type of embodiment may be included under any section/subsection. Furthermore, embodiments disclosed in any section/subsection may be combined with any other embodiments described in the same section/subsection and/or a different section/subsection in any manner.

Furthermore, example embodiments have been described above with respect to one or more running examples. Such running examples describe one or more particular implementations of the example embodiments; however, embodiments described herein are not limited to these particular implementations.

Further still, example embodiments have been described with respect to data lakes; however, it is also contemplated herein that embodiments may be implemented with respect to other types of data stores (e.g., data warehouses, databases, enterprise storage databases, and/or the like).

Moreover, according to the described embodiments and techniques, any components of systems, computing devices, servers, applications, file compactors, data lakes, databases, engines, evaluators, and/or their functions may be caused to be activated for operation/performance thereof based on other operations, functions, actions, and/or the like, including initialization, completion, and/or performance of the operations, functions, actions, and/or the like.

In some example embodiments, one or more of the operations of the flowcharts described herein may not be performed. Moreover, operations in addition to or in lieu of the operations of the flowcharts described herein may be performed. Further, in some example embodiments, one or more of the operations of the flowcharts described herein may be performed out of order, in an alternate sequence, or partially (or completely) concurrently with each other or with other operations.

The embodiments described herein and/or any further systems, sub-systems, devices and/or components disclosed herein may be implemented in hardware (e.g., hardware logic/electrical circuitry), or any combination of hardware with software (computer program code configured to be executed in one or more processors or processing devices) and/or firmware.

While various embodiments have been described above, it should be understood that they have been presented by way of example only, and not limitation. It will be apparent to persons skilled in the relevant art that various changes in form and detail can be made therein without departing from the spirit and scope of the embodiments. Thus, the breadth and scope of the embodiments should not be limited by any of the above-described example embodiments, but should be defined only in accordance with the following claims and their equivalents.

**Claims**

1. A system comprising:

a data lake storing a plurality of files managed by a table format;
a processor coupled to the data lake; and
a memory that stores program code structured to cause the processor to:

determine a statistic for a plurality of candidates comprising a first candidate and a second candidate, the first candidate comprising a first subset of the plurality of files, the second candidate comprising a second subset of the plurality of files;
rank, based on the statistic, the plurality of candidates with respect to a compaction objective, the compaction objective specifying a target outcome of compacting at least one of the plurality of candidates;
select the first candidate from among at least the first candidate and the second candidate based at least on said ranking;
determine a first compaction action based at least on the compaction objective, the table format, and the selected first candidate; and
conduct the first compaction action with respect to the first candidate.

2. The system of claim 1, wherein said ranking of the plurality of candidates with respect to the compaction objects comprises:

determining a trait based on the statistic, the trait describing a state of a respective candidate of the plurality of candidates; and
ranking the plurality of candidates based on their respective states.

3. The system of claim 1 or 2, wherein said causation of the performance of the first compaction action with respect to the first candidate comprises:
prioritizing, based at least on a computation budget available within the data lake, performance of the first compaction action over performance of a second compaction action associated with the second candidate.

4. The system of claim 3, wherein the program code is further structured to cause the processor to:

determine a remaining computation budget based on the computation budget available within the data lake and a computation cost of the first compaction action;
determine a computation cost of the second compaction action exceeds the remaining computation budget;
determine a computation cost of a third compaction action associated with a third candidate of the plurality of candidates is within the remaining computation budget, the third candidate having a lower rank than a rank of the second candidate; and
prioritize performance of the third compaction action over performance of the second compaction action.

5. The system of one of claims 1 to 4, wherein the program code is further structured to cause the processor to:

determine a third candidate of the plurality of candidates comprises one or more temporary files; and
responsive to said determination that the third candidate comprises the one or more temporary files, remove the third candidate from the plurality of candidates.

6. The system of one of claims 1 to 5, at least one of:
wherein the program code is further structured to cause the processor to:

detect a triggering event; and
determine the statistic for the plurality of candidates responsive to the detection of the triggering event, wherein preferably the triggering event comprises a percentage of fragmentation of the plurality of candidates satisfying a fragmentation criterion; and
wherein the program code is further structured to cause the processor to:

receive a result of the first compaction action;
compare the result of the first compaction action with an estimated result utilized to rank the first compaction action, resulting in a comparison result; and
update the statistic for the first candidate based at least on the comparison result.

7. A method comprising:

determining a statistic for a plurality of candidates, candidates of the plurality of candidates comprising a respective set of files managed by a table format;
determining, based on the statistic, a trait describing a state of the plurality of candidates;
ranking, based on the trait, the plurality of candidates with respect to a compaction objective specifying a target outcome of compacting at least one of the plurality of candidates;
selecting a first candidate of the plurality of candidates based at least on said ranking;
determining a first compaction action based at least on the compaction objective,
the table format, and the first candidate; and
causing performance of the first compaction action with respect to the first candidate.

8. The method of claim 7, wherein:

the plurality of candidates comprises a second candidate;
said ranking the plurality of candidates comprises:

ranking, based on the trait and a first set of files of the first candidate, the first candidate with respect to the compaction objective, resulting in a first rank, and
ranking, based on the trait and a second set of files of the second candidate, the second candidate with respect to the compaction objective, resulting in a second rank; and
said selecting the first candidate comprises:
selecting the first candidate based at least on the first rank being higher than the second rank.

9. The method of claim 7 or 8, wherein said causing performance of the first compaction action with respect to the first candidate comprises:
causing prioritization, based at least on a computation budget available within a data store that stores the plurality of candidates, of the performance of the first compaction action over performance of a second compaction action associated with a second candidate of the plurality of candidates.

10. The method of claim 9, wherein selecting the first candidate comprises:

determining a second rank of the second candidate is higher than a first rank of the first candidate;
determining a computation cost of the second candidate exceeds the computation budget of the data store;
determining a computation cost of the first candidate is within the computation budget of the data store; and
select the first candidate based at least on the computation cost of the first candidate being within the computation budget.

11. The method of one of claims 7 to 10, at least one of:
further comprising:

determining a second candidate of the plurality of candidates comprises one or more temporary files; and
responsive to said determining the second candidate comprises the one or more temporary files, removing the second candidate from the plurality of candidates;
further comprising:

detecting a triggering event; and
determining the statistic for the plurality of candidates responsive to said detecting the triggering event;
further comprising:

receiving a result of a compaction action;
comparing the result of the compaction action with an estimated result utilized to rank the compaction action, resulting in a comparison result; and
updating the statistic for the first candidate based at least on the comparison result; and
wherein the plurality of candidates are stored in a data lake managed by the table format.

**12.** A file compactor comprising:

a processor; and
a memory storing program code structured to cause the processor to:

determine a statistic for each of a plurality of candidates, candidates of the plurality of candidates comprising a respective set of files managed by a table format;
rank, based on the statistic, the plurality of candidates with respect to a compaction objective specifying a target outcome of compacting at least one of the plurality of candidates;
select a first candidate of the plurality of candidates based at least on said ranking;
determine a first compaction action based at least on the compaction objective, the table format, and the first candidate; and
conduct the first compaction action with respect to the first candidate.

**13.** The file compactor of claim 12, wherein:

the plurality of candidates comprises a second candidate;
to rank the plurality of candidates, the program code is further structured to cause the processor to:

rank, based on the statistic and a first set of files of the first candidate, the first candidate with respect to the compaction objective, resulting in a first rank, and
rank, based on the statistic and a second set of files of the second candidate, the second candidate with respect to the compaction objective, resulting in a second rank; and
to select the first candidate, the program code is further structured to cause the processor to:
select the first candidate based at least on the first rank being higher than the second rank.

**14.** The file compactor of claim 12 or 13, wherein:
to select the first candidate, the program code is further structured to cause the processor to:

determine a second rank of a second candidate of the plurality of candidates is higher than a first rank of the first candidate,
determine a computation cost of the second candidate exceeds a computation budget of the data store,
determine a computation cost of the first candidate is within the computation budget of the data store, and
select the first candidate based at least on the computation cost of the first candidate being within the computation budget; and
to cause performance of the first compaction action with respect to the first candidate, the program code is further structured to cause the processor to:
cause prioritization, based at least on the computation budget available within a data store that stores the plurality of candidates, of the performance of the first compaction objective over performance of a second compaction associated with the second candidate.

**15.** The file compactor of one of claims 12 to 14, wherein the plurality of candidates are stored in a data lake managed by the table format.

FIG. 1

100

Computing Device 102
Application 122

File Compactor 104
Candidate Observer 110
Trait Determiner 112
Candidate Ranker 114
Compaction Scheduler 116

Network 138

Evaluation Server 118
Compaction Evaluator 120

Engine Server 108
Engine 124

Server Infrastructure 106
Cluster 126A
Node 128A
Application 130
File 134
Node 128B
File 136
Cluster 126n
Table Format 140

EP 4 752 744 A1

File(s) 206

Candidate(s) 220

Candidate 222A

File(s) 224

⋮

Candidate 222n

File(s) 226

File Compactor 104

Candidate Observer 110 → 208 → Trait Determiner 112

218 ↓    210 ↓

Candidate Ranker 114

Compaction Objective 228

212 ↓

Compaction Scheduler 116

Action Scheduler 202 → 214 → Action Performer 204

216 ↓

200

FIG. 2

300

Determine a statistic for a plurality of candidates, candidates of the plurality of candidates comprising a respective set of files managed by a table format ⟩302

↓

Determine, based on the statistic, a trait describing a state of the plurality of candidates ⟩304

↓

Rank, based on the trait, the plurality of candidates with respect to a compaction objective specifying a target outcome of compacting at least one of the plurality of candidates ⟩306

↓

Select a first candidate of the plurality of candidates based at least on its ranking ⟩308

↓

Determine a first compaction action based at least on the compaction objective, the table format, and the first candidate ⟩310

↓

Cause performance of the first compaction action with respect to the first candidate ⟩312

FIG. 3

400

| Rank, based on the trait and a first set of files of the first candidate, the first candidate with respect to the compaction objective, resulting in a first rank | 402 |

| Rank, based on the trait and a second set of files of the second candidate, the second candidate with respect to the compaction objective, resulting in a second rank | 404 |

| Select the first candidate based at least on the first rank being higher than the second rank | 406 |

## FIG. 4

500

| Determine a second rank of the second candidate is higher than a first rank of the first candidate | 502 |

| Determine a computation cost of a second compaction action with respect to the second candidate exceeds the computation budget of the data store | 504 |

| Determine a computation cost of the first compaction action is within the computation budget of the data store | 506 |

| Select the first candidate based at least on the computation cost of the first candidate being within the computation budget | 508 |

## FIG. 5

600

| Prioritize, based at least on a computation budget available within a data store that stores the plurality of candidates, performance of the first compaction action over performance of a second compaction action associated with a second candidate of the plurality of candidates | 602 |

## FIG. 6

700

| Remove a second candidate file from the plurality of candidate files, resulting in a filtered plurality of candidate files | 702 |

## FIG. 7

800

| Detect a triggering event | 802 |
| --- | --- |

Step 302

FIG. 8

900

Candidate Observer 110

206

208

Trait Determiner 112

210

910

912

Statistic Updater 902

916

920

914

Compaction Evaluator 120

Result Evaluator 906

918

Updater 908

FIG. 9

1000

| Receive a result of a compaction action | 1002 |
| --- | --- |
| Compare the result of the compaction action with an estimated result utilized to rank the compaction action, resulting in a comparison result | 1004 |
| Update the statistic for the first candidate based at least on the comparison result | 1006 |

FIG. 10

1100

Application 122 → Raw Data 1104 →

Data Extractor 1102 → Extracted Data 1106 →

Data Store 1108

File 134

File 136

FIG. 11

1200

Engine 124

Managed Table API 1202

| Data Management Services 1204 | Catalog 1206 | REST API Catalog 1208 | Maintenance Services 1210 |

Data Store 1108

FIG. 12

1300

File Compactor 104

| Candidate Observer 110 | 208 → | Trait Determiner 112 | 210 → | Candidate Ranker 114 | 212 → | Compaction Scheduler 116 |

206

216

Table Format 140

File 134

File 136

Data Lake 1302

FIG. 13

## 1400

**Network-Based Server Infrastructure 1470**

**Clusters 1472**

**Nodes 1474**

**Node 1446**

**Storage 1448**

Application Programs 1476

Application Data 1478

Processor 1458

1404

Network

**On-Premises Servers 1492**

**Storage 1494**

Application Programs 1496

Application Data 1498

Processor 1490

FIG. 14

**Computing Device 1402**

**Input Device(s) 1430**

Camera 1436

Touch Screen 1432

Physical Keyboard 1438

Microphone 1434

Trackball 1440

Power Supply 1482

Accelerometer 1486

LI Receiver 1484

**NPU 1444**

MLM 1428

GPU 1442

Processor 1410

Wired Interface(s) 1480

**Output Device(s) 1450**

Speaker 1452

Display 1454

**Wireless Modem(s) 1460**

Wi-Fi 1462

Bluetooth 1464

Cellular 1466

**Storage 1420**

**Memory 1456**

Non-Removable Memory 1422

Firmware 1418

Removable Memory 1424

Operating System 1412

Application Programs 1414

Application Data 1416

Storage Device 1488

1406

**EUROPEAN SEARCH REPORT**

Application Number

EP 25 21 3325

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 11 714 573 B1 (BHARDWAJ SHASHANK [US] ET AL) 1 August 2023 (2023-08-01) <br> * abstract * <br> * column 2, line 44 - line 51 * <br> * column 3, line 6 - line 13 * <br> * column 9, line 54 - line 59 * <br> * column 10, line 45 - line 67 * <br> * column 12, line 8 - line 28 * <br> * column 12, line 46 - line 50 * <br> * column 14, line 41 - line 43 * <br> * column 22, line 1 - line 11 * <br> * figure 12 * <br> ----- | 1-15 | INV. <br> G06F16/21 |
| A | Narayanan Sivabalan: "Apache Hudi Compaction", <br> , <br> 17 October 2022 (2022-10-17), pages 1-13, XP093361969, <br> Retrieved from the Internet: <br> URL:https://medium.com/@simpsons/apache-hudi-compaction-6e6383790234 <br> * the whole document * <br> ----- | 1-15 | |
| A | Syam Anupom: "Optimizing data warehouse storage", <br> , <br> 21 December 2020 (2020-12-21), pages 1-20, XP093362256, <br> Retrieved from the Internet: <br> URL:https://netflixtechblog.com/optimizing-data-warehouse-storage-7b94a48fdcbe <br> * the whole document * <br> ----- <br> -/-- | 1-15 | |

**TECHNICAL FIELDS SEARCHED (IPC)**

G06F

The present search report has been drawn up for all claims

| Place of search | Date of completion of the search | Examiner |
|---|---|---|
| Berlin | 5 February 2026 | Pose Rodríguez, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 21 3325

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| T | GRUENHEID ANJA ET AL: "AutoComp: Automated Data Compaction for Log-Structured Tables in Data Lakes", PROCEEDINGS OF THE 14TH INTERNATIONAL WORKING CONFERENCE ON VARIABILITY MODELLING OF SOFTWARE-INTENSIVE SYSTEMS, ACMPUB27, NEW YORK, NY, USA, 22 June 2025 (2025-06-22), pages 404-417, XP098111739, DOI: 10.1145/3722212.3724430 ISBN: 978-1-4503-7294-7 * the whole document * ----- | | |

TECHNICAL FIELDS
SEARCHED       (IPC)

The present search report has been drawn up for all claims

| Place of search | Date of completion of the search | Examiner |
|---|---|---|
| Berlin | 5 February 2026 | Pose Rodríguez, J |

page 2 of 2

**EP 4 752 744 A1**

## ANNEX TO THE EUROPEAN SEARCH REPORT
## ON EUROPEAN PATENT APPLICATION NO.

EP 25 21 3325

This annex lists the patent family members relating to the patent documents cited in the above-mentioned European search report.
The members are as contained in the European Patent Office EDP file on
The European Patent Office is in no way liable for these particulars which are merely given for the purpose of information.

05-02-2026

| Patent document cited in search report | Publication date | Patent family member(s) | Publication date |
|---|---|---|---|
| US 11714573 B1 | 01-08-2023 | NONE | |

EPO FORM P0459

For more details about this annex : see Official Journal of the European Patent Office, No. 12/82

36

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63725909